# EUROPEAN PATENT APPLICATION

(11) **EP 4 787 263 A1**
(43) Date of publication of application: **05.08.2026**
(21) Application number: 25155138.8
(22) Date of filing: 31.01.2025
(51) Int. Cl.: G06Q 10/20

(54) **SYSTEMS AND METHODS FOR MANAGING ASSET PERFORMANCE IN TECHNICAL INSTALLATION USING GENERATIVE ARTIFICIAL INTELLIGENCE MODELS**

(71) Applicant: Siemens Aktiengesellschaft, 80333 München (DE)
(72) Inventor: MENON, Nisha, Bangalore, Karnataka 560100 (IN); D, Aravind, Thiruvalla, Kerala 689101 (IN); KUMAR, Naveen, Bangalore, Karnataka 560100 (IN)
(74) Representative: HKW Intellectual Property PartG mbB

(57) **Abstract**

The present invention relates to a system and method for managing asset performance in technical installation (114) using generative artificial intelligence models. The method includes obtaining input datasets associated with assets (110AN) from data sources (106A-N). The input datasets comprise multi-modal data associated with the assets (110A-N). The method includes identifying type of data format associated with the input datasets. The method includes determining a data transformation model applicable to the type of data format. The method further includes transforming the input datasets into target data format. The method includes generating graphical representation based on the input datasets. The method further includes determining anomalies associated with the plurality of assets (110A-N) and artifacts of the technical installation (114) based on the graphical representation. The method includes determining corrective actions for rectifying the anomalies. Moreover, the method includes outputting graphical representation, the anomalies, and the corrective actions on a user interface.

## Description

The present invention generally relates to the field of generative artificial intelligence (Gen-AI)-based systems, and more particularly relates to a system and method for managing asset performance in technical installation using generative artificial intelligence models.

Typically, operational issues in industrial plants are required to be accurately and timely addressed in order to maintain productivity and minimize downtime. Specifically, identification and rectification of these issues optimize performance, ensure seamless functioning of interconnected systems, and prevent significant operational and financial losses. The industrial plants may use systematic approaches to identify and resolve these operational issues. These approaches involve utilizing diverse sources of information, such as operational time-series data, product manuals, heatmaps, product visuals, and vibration data. Traditionally, these sources are analyzed and correlated manually to identify root cause of problems associated with such operational issues. However, such manual process is time-intensive, error-prone and requires significant effort, which causes delays in restoring normal operations.

In general, operations in the industrial plants are typically compartmentalized, with different responsibilities assigned to personnel across various departments. This compartmentalization extends to data management, where specialized teams have access only to specific data sets relevant to their respective domains. Consequently, critical decisions are predominantly made by domain experts based on their specialized understanding and the data available to them. The dependence on domain-specific expertise for decision-making introduces further limitations, particularly when operational issues span multiple domains or when experts are unavailable. Therefore, there lies a significant challenge in reducing reliance on manual expertise while automating analysis. Furthermore, the ability to present correlated data in an intuitive and actionable manner is essential for effective decision-making.

Some of the current methods employed for managing multiple sources of information related to industrial assets involve data storage systems such as file stores, database systems, and image stores. These storage systems provide schematic representations to establish basic relationships within their respective datasets. However, such systems lack mechanisms to natively store and monitor relationships across different storage systems, making it challenging to correlate information from disparate sources over a given period.

Further, some of the other existing methods for data correlation, including template matching for images, dynamic time warping for time-series data, spectral analysis for vibration data, and hamming distance calculations, are used to align identical sources of data. Despite their utility, these existing methods are inefficient when applied to analyze an event. For example, conducting root cause analysis for events such as burner malfunctions in coffee roasters requires integrating all relevant sources of information about the asset and accurately establishing interrelationships. The absence of an effective methodology to achieve this limit the ability to perform detailed and accurate analyses.

Further, real-time data processing is another critical issue, as many industrial processes demand timely analysis to address operational problems promptly. Existing methods often fail to process and correlate large volumes of data in real-time, resulting in delays and inefficiencies. Therefore, ensuring the security and integrity of sensitive operational data further adds to the complexity, as unauthorized access, tampering, or corruption may undermine the reliability of analyses and compromise operations.

Additionally, accurately aligning, and correlating data collected at different time points is crucial for understanding operational issues, however this always remain a technical hurdle. Similarly, use of distinct data formats and standards across different domains within industrial plants complicates interoperability, limiting the effectiveness of multi-domain analyses and decision-making processes.

Therefore, there is a need for an improved system and method which accurately and securely correlates and represents multiple modalities of data and their complex relationships to efficiently and promptly handle these operational issues.

Therefore, it is an object of the present invention to provide a method and system for managing asset performance in technical installation using generative artificial intelligence models.

The object of the present invention is achieved by a method for managing asset performance in technical installation using generative artificial intelligence models. The method comprises obtaining input datasets associated with assets in a technical installation from a plurality of data sources. The input datasets comprise a multi-modal data associated with the assets in the technical installation. The multi-modal data corresponds to one or more data formats. The multi-modal data comprises a plurality of data dimensions. The input datasets comprise a multimedia data, a tabular data, a text data, an audio data, a time series data, an engineering diagram layout design data, and the like. The plurality of data sources comprises external data sources, and internal data sources.

Further, the method comprises identifying a type of data format associated with each of the input datasets by pre-processing the obtained input datasets using one or more pre-processing models. The one or more pre-processing models comprises for example, but not limited to, Natural Language Processing (NLP) models, foundation models, multi-model embeddings, Convolutional Neural Networks (CNNs), Graph Neural Networks (GNNs), dimensionality reduction models, Generative Artificial Intelligence models, Hierarchical Graph Attention Networks, and the like. The type of the data format comprises for example, but not limited to, structured data formats, unstructured data formats, time-series data formats, image and visual data formats, acoustic and vibration data formats, control system data formats, and geospatial data formats.

Further, the method comprises determining a data transformation model applicable to the identified type of data format using an Artificial Intelligence (AI)-based model. The data transformation model comprises one of artificial intelligence models and foundational models. The Artificial Intelligence (AI)-based model comprises a semantic model. The semantic model comprise for example, but not limited to, Data Exchange in the Process Industry (DEXPI), or embeddings model and the like. The data transformation model understands and refines the input datasets for the identified type of data format using AI based model.

Further, the method comprises transforming each of the obtained input datasets into a target data format based on the determined data transformation model. The target data format may conform to any of the structured data formats, unstructured data formats, time-series data formats, image and visual data formats, acoustic and vibration data formats, control system data formats, and geospatial data formats.

Furthermore, the method comprises generating a graphical representation corresponding to the technical installation based on the transformed input datasets. The graphical representation comprises a plurality of nodes representing a plurality of assets and artifacts within the technical installation. Each of the plurality of nodes are connected using one or more connection paths. The graphical representation may correspond to a knowledge graph representation. This representation enables plant operators and AI workflows to identify complex relationships and make informed decisions with a broader and more detailed context. This linking process allows for a holistic view of the asset and its sensors, facilitating better analysis and decision-making. The graph structure encapsulates the context of data points. Entities and their interrelationships are represented as nodes and edges, respectively, which provide a rich context for each piece of information. This context is indispensable for interpreting patterns or anomalies in the input datasets. Further, the graphical representation represents and links different data modalities, such as images, audio, sensor data, and text. This feature enables cross-modal analysis, where insights are derived by considering all modalities together. For instance, an anomaly detected in sensor data could be better understood by concurrently analyzing associated image or audio data.

Furthermore, the method comprises determining one or more anomalies associated with the plurality of assets and the artifacts of the technical installation based on the generated graphical representation using one or more Large Language Models (LLMs). The one or more anomalies comprises operational anomalies, process anomalies, sensor anomalies, data anomalies, environmental anomalies, and visual anomalies. The one or more one or more Large Language Models (LLMs) comprises GPT-based models (e.g., OpenAI's GPT series), Bidirectional Encoder Representations from Transformers (BERT), and Text-to-Text Transfer Transformer (T5).

Furthermore, the method comprises determining one or more corrective actions for rectifying the determined one or more anomalies based on an Artificial Intelligence (AI)-based action model. The Artificial Intelligence (AI)-based action model comprises for example, but not limited to, explainer (for example, SHapley Additive explanations (SHAP), Local Interpretable Model-agnostic Explanations (LIME)) models to provide explanations of anomalies, identify SOPs, perform a procedure explained in SOP, test/validate changes and the like. The one or more corrective actions comprises for example, but not limited to, operational, technical, and procedural domains. These corrective actions are determined to address specific anomalies comprehensively, ensuring efficient restoration of normal operations, minimizing downtime, and reducing the likelihood of recurrence.

Additionally, the method comprises outputting the graphical representation, the determined one or more anomalies and the determined one or more corrective actions on a user interface of a user device.

Further, the method comprises obtaining a user prompt for identifying a state and performance of the plurality of assets based on the generated graphical representation. The user prompt comprises one or more questions associated with the state and the performance of the plurality of assets. Further, the method comprises generating a response to the user prompt by applying the generated user prompt to the one or more Large Language Models. The response comprises the determined one or more anomalies and the determined one or more corrective actions.

In a preferred embodiment, in generating the response to the user prompt by applying the generated user prompt to the one or more large language models, the method comprises identifying an intent within the user prompt by extracting one or more keywords existing in the one or more questions. Further, the method comprises determining one or more sub-graphs within the generated graphical representation based on the identified intent. Furthermore, the method comprises determining one or more relationships between the plurality of assets within the determined one or more sub-graphs based on the identified intent and the one or more keywords. Additionally, the method comprises generating a context for the response by correlating the determined one or more relationships between the plurality of assets. Moreover, the method comprises applying the generated context as an input to the one or more large language models. Further, the method comprises generating the response to the user prompt based on results of the one or more large language models.

In another preferred embodiment, in transforming each of the obtained input datasets into the target data format based on the determined data transformation model, the method comprises classifying the obtained input datasets into a plurality of data categories based on the type of data format. The plurality of data categories comprises structured data category, unstructured data category, time-series data category, image and visual data category, acoustic and vibration data category, control system data category, and geospatial data category. Further, the method comprises extracting first set of features associated with the obtained input datasets based on the classification. The extracted first set of features comprises spectral features and temporal features. Further, the method comprises generating one or more embeddings for the extracted first set of features using determined data transformation model. The determined data transformation model comprises one of artificial intelligence models and foundational model. The one or more embeddings comprises multi-modal embeddings, text embeddings, spectral embeddings, and temporal embeddings. Further, the method comprises transforming each of the obtained input datasets into the target data format based on the generated one or more embeddings.

In another preferred embodiment, in generating the graphical representation corresponding to the technical installation based on the transformed input datasets, the method comprises determining a type of modality associated with the obtained input datasets. Further, the method comprises extracting a second set of features from each of the obtained input datasets based on the determined type of modality. The second set of features comprises asset-specific features and contextual features. The method further comprises extracting metadata references from each of the obtained input datasets based on the determined type of modality. Furthermore, the method comprises identifying common features across the plurality of modalities by comparing the extracted second set of features from one modality with corresponding set of features of remaining modalities. Furthermore, the method comprises establishing the one or more relationships between the obtained input datasets corresponding to plurality of modalities using the identified common features across the plurality of modalities. Additionally, the method comprises associating each of the identified common features with the plurality of nodes based on the extracted metadata references and the established one or more relationships.

In yet another preferred embodiment, the method further comprises determining a hierarchical level, a data object category and a node position level corresponding to the type of modality based on the identified common features, extracted metadata references and the established one or more relationships. Furthermore, the method comprises associating each of the identified common features of specific modality with the plurality of nodes based on the determined hierarchical level, the data object category, and the node position level. Furthermore, the method comprises generating a linked representation between each of the plurality of modalities based on the association. The linked representation comprises a knowledge graph representation.

In an aspect of the preferred embodiment, in generating the graphical representation corresponding to the technical installation based on the transformed input datasets, the method comprises identifying a number of assets and the artifacts corresponding to the assets within the technical installation based on the transformed input datasets. The artifacts correspond to information and parameters associated with the assets. The method further comprises correlating each of the identified number of the assets with the artifacts based on the metadata references. The method further comprises determining a context between each of the number of the assets and the artifacts corresponding to the assets based on the correlation. Further, the method comprises determining the one or more relationships between each of the number of the assets and the artifacts based on the determined context. Furthermore, the method comprises generating the plurality of nodes corresponding to the number of the assets. Additionally, the method comprises generating the one or more connection paths connecting each of the generated plurality of nodes based on the determined one or more relationships. Furthermore, the method comprises generating the graphical representation corresponding to the technical installation based on the generated plurality of nodes and the generated one or more connection paths.

In another aspect of the preferred embodiment, in generating the graphical representation corresponding to the technical installation based on the transformed input datasets, the method comprises determining the plurality of modalities associated with the obtained input datasets. Further, the method comprises generating the plurality of nodes based on the determined plurality of modalities. Furthermore, the method comprises determining a subset of nodes from among the generated plurality of nodes comprising semantically similar datasets. The subset of nodes is represented as vectors positioned closer in a vector space. Further, the method comprises assigning a hierarchical level for each of the plurality of nodes and the determined subset of nodes. Furthermore, the method comprises creating one or more embeddings for each of the plurality of nodes and the determined subset of nodes based on the assigned hierarchical level using the one or more Large Language Models. The one or more embeddings correspond to a numerical representation of the plurality of nodes. Further, the method comprises merging the created one or more embeddings with the metadata references of the obtained input datasets. Furthermore, the method comprises creating one or more joint embeddings for each of the plurality of nodes and the determined subset of nodes. The one or more joint embeddings represent a combined embedding of the plurality of modalities.

In a preferred embodiment, the method further comprises creating a vector index corresponding to each of the created one or more joint embeddings for querying the plurality of nodes and the determined subset of nodes. The vector index is optimized for operations such as, for example, but not limited to, nearest neighbor search, clustering, and semantic similarity queries. The vector index is associated with the joint embeddings of the nodes in the knowledge graph. Each node's joint embedding is stored in the vector index, making it possible to query the graph for nodes that are semantically or contextually similar based on their multi-modal representations. By leveraging the vector index, the computing system may quickly identify nodes or subsets of nodes that share similar characteristics, relationships, or hierarchical levels.

In an aspect of the preferred embodiment, the method comprises receiving a query related to at least one asset of the technical installation from a user device. The query may comprise a set of questionnaires relating to the one or more assets in the technical installation. Further, the method comprises identifying a closest node to the received query by traversing the vector index based on the one or more joint embeddings. Further, the method comprises retrieving subsequent closest nodes to the query by hierarchically traversing neighboring nodes of the identified closest node. Furthermore, the method comprises extracting the first set of features associated with the identified closest node and the retrieved subsequent closest nodes by determining feature-level embeddings of the closest node and the retrieved subsequent closest nodes. Furthermore, the method comprises generating a response to the received query using the one or more Large Language models. The response comprises the extracted first set of features associated with the identified closest node and the retrieved subsequent closest nodes.

In yet another aspect of the preferred embodiment, in determining the one or more anomalies associated with the plurality of assets and the artifacts of the technical installation, the method comprises correlating each of the plurality of nodes and the one or more connection paths within the generated graphical representation using a context. Further, the method comprises identifying one or more patterns associated with the plurality of nodes and the one or more connection paths within the generated graphical representation based on the correlation. The one or more patterns comprises. Furthermore, the method comprises determining a behavioural score and a performance score for each of the plurality of nodes within the generated graphical representation based on the identified one or more patterns. Furthermore, the method comprises mapping the determined behavioural score and the performance score with a predetermined threshold value. The method further comprises determining a deviation in the determined behavioural score and the performance score based on the mapping. Furthermore, the method comprises determining the one or more anomalies associated with the plurality of assets and the artifacts of the technical installation based on the determined deviation.

In yet another preferred embodiment, the method comprises predicting an occurrence of an event within the technical installation based on the determined behavioural score and the performance score. The event comprises the one or more anomalies. The method further comprises applying the predicted occurrence of the event as an input to a trained Large Language Model (LLM). Furthermore, the method comprises generating a LLM response comprising a root cause for the predicted occurrence of the event. The adaptability of LLMs enables them to analyze input data from various domains, making them versatile tools for root cause analysis. Their ability to generalize from vast datasets allows them to infer root causes even when the input information is incomplete. Moreover, LLMs enhance trust by providing clear explanations and logic for their diagnoses. However, challenges such as input ambiguity or lack of domain-specific knowledge in base models can arise. These challenges can be mitigated by fine-tuning LLMs on specialized datasets and ensuring the input is detailed and context rich. Through this structured approach, LLMs effectively predict and diagnose complex technical anomalies.

The object of the present invention is also be achieved by a computing system for managing asset performance of one or more assets in a technical installation using Generative Artificial Intelligence (Gen AI) models. The computing system may comprise one or more processors and a memory coupled to the one or more processors. The memory comprises multi-modal graph generation module stored in the form of machine-readable instructions and executable by the one or more processors. The multi-modal graph generation module is configured for performing the method described above.

The object of the invention can also be achieved by a computing environment comprising one or more user devices, one or more technical installation and a computing system. The one or more technical installation comprises one or more assets. Further, the computing system is communicatively coupled to the one or more technical installation and the one or more user devices via a network. The computing system comprises a multi-modal graph generation module capable of performing method steps as described above.

The object of the invention can also be achieved by a computer-program product, having machine-readable instructions stored therein, that when executed by a processor, causes the processor to perform method steps as described above.

The above-mentioned and other features of the invention will now be addressed with reference to the accompanying drawings of the present invention. The illustrated embodiments are intended to illustrate but not limit the invention.

The present invention is further described hereinafter with reference to illustrated embodiments shown in the accompanying drawings, in which:
FIG. 1 is a block diagram representation of an exemplary computing environment capable of managing asset performance of one or more assets in a technical installation, according to an embodiment of the present invention;
FIG. 2 is a block diagram of a computing system such as those shown in FIG. 1, depicting various components to implement embodiments of the present invention;
FIG. 3 is a block diagram of a multi-modal graph generation module, such as those shown in FIG. 1 and 2, capable of managing asset performance of one or more assets, according to the embodiment of the present invention;
FIG. 4 is a block diagram illustrating a process of generating a graphical representation using various modalities of industrial data, according to an embodiment of the present invention;
FIG. 5 is a schematic representation of an exemplary holistic graph comprising different modalities in different formats along with metadata context, according to the embodiment of the present invention;
FIG. 6 is a schematic representation of an exemplary anomaly graph with metadata connected to service ticket graph, according to an embodiment of the present invention;
FIG. 7 is a schematic representation of an exemplary graphical representation of a work order ticket with the various extracted entities, according to an embodiment of the present invention;
FIG. 8 is a schematic representation of an exemplary enriched knowledge graph depicting a single asset, according to an embodiment of the present invention;
FIG. 9 is a block diagram representation illustrating an exemplary process of generating a response to a user query using one or more Large Language models, according to an embodiment of the present invention; and
FIG. 10 is a process flowchart illustrating an exemplary method for managing asset performance of one or more assets in technical installation, according to an embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

Throughout the present disclosure, the term "generative artificial-intelligence (Gen AI) model" refers to an artificial intelligence system designed to create new data instances that resemble the original data it was trained on. Such models are typically built on advanced deep learning architectures and are capable of generating content across various modalities, including text, images, audio, and video. The model learns patterns, structures, and relationships within the training data and utilizes this knowledge to produce outputs that are contextually relevant and coherent.

The Gen AI model may include, but is not limited to, models trained using neural network frameworks, such as transformer-based architectures, recurrent neural networks, or convolutional neural networks. The Gen AI model may be configured to perform tasks such as generating natural language text, synthesizing visual data, producing audio signals, or creating other forms of synthetic data based on input prompts or parameters. In certain example embodiments, the Gen AI model may be fine-tuned for domain-specific applications by leveraging additional training data to improve its relevance and accuracy for targeted use cases.

A Large Language Model (LLM) refers to a subset of Gen AI models specifically designed to process, understand, and generate human-like text by using extensive training on large-scale text corpora. Such models are typically based on advanced neural network architectures, such as for example, transformers, which enable the analysis of contextual relationships between words, phrases, and sentences.

The LLM model is configured to perform a wide range of natural language processing (NLP) tasks, including but not limited to text classification, sentiment analysis, question answering, machine translation, summarization, and text generation. The model achieves these capabilities by utilizing pre-trained representations of language that can be fine-tuned for specific applications or domains.

In certain example embodiments, the LLM model may be deployed as a standalone system or integrated with other computational systems to enhance its utility in various scenarios, such as virtual assistants, document processing, knowledge retrieval, and conversational AI. The LLM model may process and interpret inputs in multiple languages, contexts, or formats.

In an example embodiment, a foundational model refers to a generative AI model trained on extensive and diverse datasets to establish a generalized understanding across multiple data modalities, such as text, images, audio, and sensor data. These models serve as a base for analyzing, processing, and correlating multimodal information, enabling seamless integration and interpretation of heterogeneous data sources.

The foundational model employs advanced architectures, such as transformers or similar deep learning frameworks, to learn complex patterns and relationships within the data. This capability allows them to provide a unified representation that may be applied across various tasks, including anomaly detection, root cause analysis, predictive maintenance, and data correlation in industrial applications.

Further, the foundational model may be pre-trained on generic multimodal data and subsequently fine-tuned for domain-specific scenarios, such as operational diagnostics in industrial plants. The foundational models may process diverse data formats and dimensions, such as time-series data, image embeddings, statistical summaries, and audio representations, and establish meaningful connections across them. The foundational model may operate independently or as part of a larger system to automate and enhance decision-making processes in the context of industrial operations.

Throughout the specification, the term "asset," as used herein, may include a broad range of products, devices, objects systems, instruments, or machinery employed in various industries or technical installations. This includes but is not limited to, industrial machinery comprising motors, gears, bearings, shafts, switchgears, rotors, circuit breakers, protection devices, remote terminal units, transformers, reactors, disconnectors, gear-drives, gradient coils, magnets, radio frequency coils, and the like. Further, the assets may include, such as for example, but not limited to, technical systems comprising turbines, large drives, and other complex systems. It should be understood that the term "asset" should be interpreted broadly to include any product or device or system that generates data or requires analysis within the context of this invention.

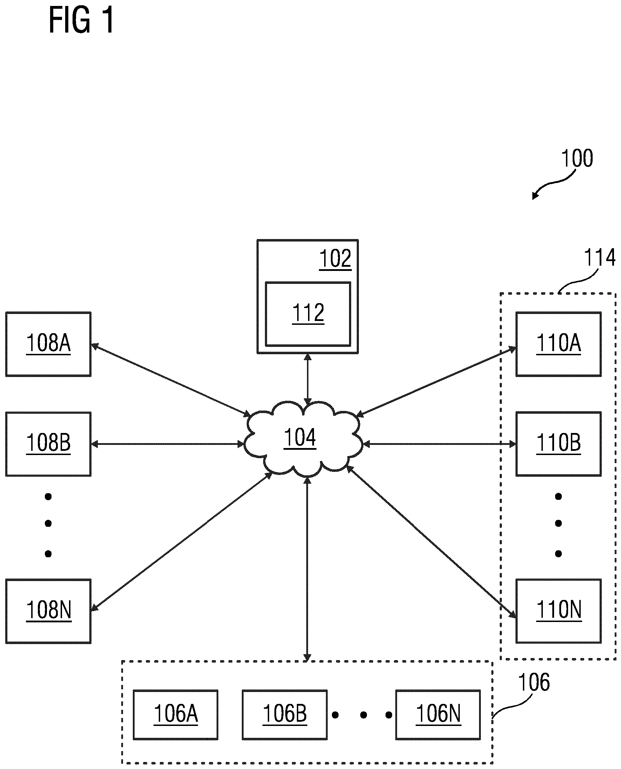

FIG. 1 is a block diagram representation of an exemplary computing environment 100 capable of managing asset performance of one or more assets 110A-N in a technical installation 114, according to an embodiment of the present invention.

Particularly, FIG. 1 depicts a computing system 102 which is capable of managing asset performance of one or more assets 110A-N in a computing environment 100. The computing environment 100 comprises the computing system 102, one or more user devices 108A-N, and the one or more assets 110A-N (collectively referred herein as asset 110). As used herein, "computing environment" refers to a processing environment comprising configurable computing physical and logical resources, for example, networks, servers, storage, applications, services, and the like, and data distributed over a platform. The computing environment 100 provides on-demand network access to a shared pool of the configurable computing physical and logical resources.

The computing system 102 is connected to one or more asset(s) 110A-N via a network 104 (e.g., Internet). The one or more asset(s) 110A-N may include servers, robots, switches, automation devices, programmable logic controllers (PLC)s, human machine interfaces (HMIs), input output modules, motors, valves, pumps, actuators, sensors, gas turbines, and other industrial equipment(s). The one or more asset(s) 110A-N may also include one or more sensing units (not shown). The one or more sensing unit may be configured for capturing real-time asset data associated with the one or more assets 110A-N. The real time asset data comprises temperature values, pressure values, oil levels, weather condition values, and any other data measured by one or more sensing units placed in the vicinity of an asset 110A or embedded to the one or more assets 110A-N. Specifically, the one or more sensing unit senses the real-time data of the asset 110 and transmits the sensed real-time data of the asset 110 to the computing system 102. The one or more assets 110A-N may be internet of things (IoT) enabled or may be edge devices. The one or more asset(s) 110A-N are remotely accessed and managed by the computing system 102.

The one or more asset(s) 110A-N may generate data that may be used for analysis or decision-making. In an example embodiment, the one or more asset(s) 110A-N may be located independently across the computing environment 100, ensuring decentralization and potentially improving data privacy.

The one or more user devices 108A-N may be a laptop computer, desktop computer, tablet computer, smartphone and the like. The one or more user devices 108A-N may access applications (such as enabling users to manage performance of the one or more assets 110A-N) via a web browser or an application. In an embodiment, the one or more user devices 108A-N may communicate with the computing system 102 using application programming interfaces (APIs). Each user devices 108A-N may comprise a user profile and corresponding access privileges. The real time data corresponding to the user devices 108A-N may be shared or exchanged based on the user profile and the access privileges. The user devices 108A-N may access the computing system 102 for managing the performance of the one or more assets 110A-N. In an embodiment, the user devices 108A-N comprises a multi-modal graph generation application (not shown). The user devices 108A-N can access applications (such as enabling users to manage performance of the one or more assets 110A-N) via the web browser. Further, the user devices 108A-N may install a plug-in for accessing the applications to manage the performance of the one or more assets 110A-N on the computing system 102 via a plurality of software applications running on the user devices 108A-N.

The computing system 102 may be a remote server, an edge server, a public cloud, a private cloud, and/or a hybrid cloud configured to provide dedicated software services to its users. Further, the computing system 102 is connected to one or more user devices 108A-N via the network 104.

The external data sources 106A-N are configured to store external information associated with each of user devices 108A-N, and the assets 110A-N. In an embodiment, the data sources 106A-N may comprise a relational database (RDBMS), a cloud database, a file system and not only SQL (NoSQL) database. The external data sources 106A-N may be encrypted to secure all data stored. In an example embodiment, external data sources 106A-N may correspond to external agency databases, such as government agencies, regulatory authorities, compliance database and the like. In some other example embodiments, the external data sources 106A-N may correspond to different stakeholders or data contributors of the technical installation 114.

The one or more technical installations 114 may include, such as for example, but not limited to, power plants, wind farms, power grids, warehouses, home automation systems, manufacturing facilities, process plants, and other industrial/non-industrial setups.

The computing system 102 may comprise a plurality of servers or processors (also known as `cloud infrastructure'), which are geographically distributed, connected with each other via the network 104. A dedicated platform (hereinafter referred to as `cloud platform') is installed on the servers/processors for providing above functionality as an application (hereinafter referred to as `cloud application'). The cloud platform may comprise a plurality of software programs executed on one or more servers or processors of the computing system 102 to enable delivery of the requested applications to the devices and its users.

The computing system 102 comprises a cloud platform, a multimodal graph generation module 112, a server including hardware resources and an operating system (OS), a network interface, and one or more application program interfaces (APIs). The network interface enables communication between the computing system 102, and the one or more user device(s) 108A-N. The one or more application program interfaces (APIs) may allow the users at the one or more user device(s) 108A-N to access asset information stored at the computing system 102 and perform one or more actions on the assets 110A-N as same instance. The server may include one or more servers on which the OS is installed. The servers may comprise one or more processors, one or more storage devices, such as, memory units, for storing data and machine-readable instructions for example, applications and the one or more application programming interfaces (APIs), and other peripherals required for providing computing functionality. The cloud platform may be a platform which enables functionalities such as data reception, data processing, data rendering, data communication, and the like using the hardware resources and the OS of the servers and delivers the aforementioned services using the application programming interfaces deployed therein. The platform may comprise a combination of dedicated hardware and software built on top of the hardware and the OS. In an alternate embodiment, the computing system 102 may be any other computational server, such as for example, but not limited to, a remote server, a web server, an edge server, a metaverse server and the like.

As used herein the communication network 104, refers to, for example, any wired or wireless network such as the internet, an intranet, that implements Bluetooth^{®} of Bluetooth Sig, Inc., a network that implements Wi-Fi^{®} of Wi-Fi Alliance Corporation, an ultra-wideband communication network (UWB), a wireless universal serial bus (USB) communication network, a communication network that implements ZigBee^{®} of ZigBee Alliance Corporation, a general packet radio service (GPRS) network, a mobile telecommunication network such as a global system for mobile (GSM) communications network, a code division multiple access (CDMA) network, a third generation (3G) mobile communication network, a fourth generation (4G) mobile communication network, a fifth generation (5G) mobile communication network, a sixth generation (6G) mobile communication network, a long-term evolution (LTE) mobile communication network, a public telephone network, a local area network, a wide area network, an internet connection network, an infrared communication network, or a network formed from any combination of these networks.

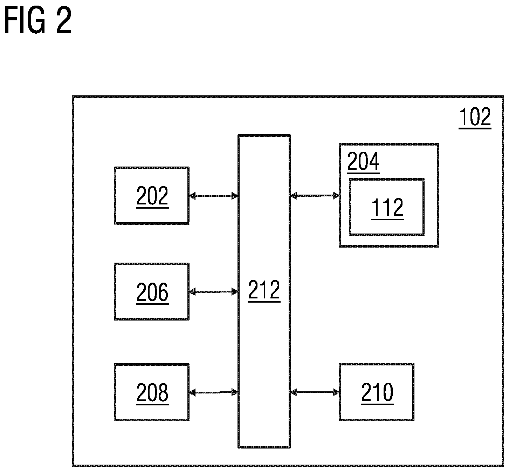

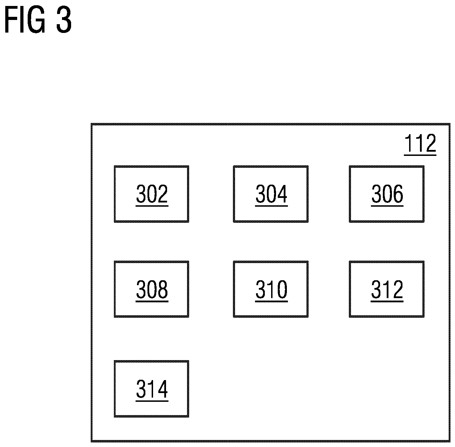

The computing system 102 comprises a multimodal graph generation module 112. The computing system 102 also comprise a processor, a memory, a storage unit, input output unit and a display unit. A detailed view of various components of the computing system 102 is shown in FIG. 2. The computing system 102 may be a standalone system or a system on a cloud or an edge server. The multimodal graph generation module 112 is stored in the form of machine-readable instructions and executable by the computing system 102. The detailed components of the multimodal graph generation module 112 has been explained in FIG. 3.

In an embodiment, the computing system 102 is configured for obtaining input datasets associated with the assets 110A-N in the technical installation 114 from the plurality of data sources 106A-N. The input datasets comprise a multi-modal data associated with the assets 110A-N in the technical installation 114. The multi-modal data corresponds to one or more data formats. The multi-modal data comprises a plurality of data dimensions. The input datasets comprise a multimedia data, a tabular data, a text data, an audio data, a time series data, an engineering diagram layout design data, and the like. The plurality of data sources 106A-N comprises external data sources, and internal data sources.

Further, the computing system 102 is configured for identifying a type of data format associated with each of the input datasets by pre-processing the obtained input datasets using one or more pre-processing models. The one or more pre-processing models comprises for example, but not limited to, Natural Language Processing (NLP) models, foundation models, multi-model embeddings, Convolutional Neural Networks (CNNs), Graph Neural Networks (GNNs), dimensionality reduction models, Generative Artificial Intelligence models, Hierarchical Graph Attention Networks, and the like. The type of the data format comprises for example, but not limited to, a structured data formats, unstructured data formats, time-series data formats, image and visual data formats, acoustic and vibration data formats, control system data formats, and geospatial data formats.

Further, the computing system 102 is configured for determining a data transformation model applicable to the identified type of data format using an Artificial Intelligence (AI)-based model. The data transformation model comprises for example, but not limited to, one of artificial intelligence models and foundational models. The Artificial Intelligence (AI)-based model comprises for example, but not limited to, semantic model. The semantic model comprise for example, but not limited to, Data Exchange in the Process Industry (DEXPI), or embeddings model and the like. The data transformation model understands and refines the input datasets for the identified type of data format using AI based model.

Further, the computing system 102 is configured for transforming each of the obtained input datasets into a target data format based on the determined data transformation model. The target data format may conform to for example, but not limited to, the structured data formats, unstructured data formats, time-series data formats, image and visual data formats, acoustic and vibration data formats, control system data formats, and geospatial data formats.

Furthermore, the computing system 102 is configured for generating a graphical representation corresponding to the technical installation 114 based on the transformed input datasets. The graphical representation comprises a plurality of nodes representing a plurality of assets 110A-N and artifacts within the technical installation 114. Each of the plurality of nodes are connected using one or more connection paths. The graphical representation may correspond to for example, but not limited to, a knowledge graph representation.

Furthermore, the computing system 102 is configured for determining one or more anomalies associated with the plurality of assets 110A-N and the artifacts of the technical installation 114 based on the generated graphical representation using one or more Large Language Models (LLMs). The one or more anomalies comprises operational anomalies, process anomalies, sensor anomalies, data anomalies, environmental anomalies, and visual anomalies. Further, the term "anomalies" refers to abnormal or unexpected behaviours in the operation of the assets 110A-N, often detected through the analysis of sensor data. These anomalies may arise due to sudden changes in sensor behaviour, which may be categorized into step changes or ramp changes. In some cases, an anomaly may indicate a potential malfunction or shutdown of the asset 110 or the overall technical installation 114, thus requiring immediate attention and resolution The one or more Large Language Models (LLMs) comprises GPT-based models (e.g., OpenAI's GPT series), Bidirectional Encoder Representations from Transformers (BERT), and Text-to-Text Transfer Transformer (T5).

Furthermore, the computing system 102 is configured for determining one or more corrective actions for rectifying the determined one or more anomalies based on an Artificial Intelligence (AI)-based action model. The Artificial Intelligence (AI)-based action model comprises for example, but not limited to, explainer (for example, SHapley Additive explanations (SHAP), Local Interpretable Model-agnostic Explanations (LIME)) models to provide explanations of anomalies, identify SOPs, perform a procedure explained in SOP, test/validate changes and the like. The one or more corrective actions comprises for example, but not limited to, operational, technical, and procedural domains. In the context of equipment maintenance and repair, actions may include tightening loose bolts or fasteners to address abnormal vibrations, cleaning or replacing clogged filters to restore normal flow rates, recalibrating sensors to correct inaccurate readings, or repairing and replacing worn-out components such as bearings, belts, or gears or the like. These actions aim to resolve mechanical or structural issues that disrupt normal operations. Further, the one or more corrective actions may include for example, but not limited to, finding root causes, modifying temperature or pressure setpoints to ensure consistent production quality, altering flow rates in pipelines to prevent blockages or surges, or changing mixing times to achieve the desired consistency in materials. Such interventions help restore optimal operational conditions and prevent further deviations.

Furthermore, the one or more corrective actions may include for example, but not limited to, reconfiguring control system parameters based on anomaly analysis, implementing updated algorithms or models in automated systems to prevent recurrence, or correcting inconsistencies in datasets to enhance decision-making accuracy. Leveraging insights from data ensures precise and targeted corrective measures.

The one or more corrective actions may include for example, but not limited to, temporarily shutting down operations to prevent further damage or hazards, isolating defective equipment from production lines, or activating backup systems to maintain continuity. These measures safeguard both personnel and equipment.

Further, the one or more corrective actions may include for example, but not limited to, providing training to operators on handling specific anomalies, updating standard operating procedures to reflect new insights, and establishing preventive maintenance schedules based on historical data all contribute to long-term anomaly management.

Lastly, software and system updates may include installing patches to rectify control system anomalies, reconfiguring system settings to improve stability, or implementing real-time monitoring tools to track performance metrics. Material management actions, such as replacing defective raw materials or adjusting storage conditions, also address anomalies related to input quality. These corrective actions are designed to address specific anomalies comprehensively, ensuring efficient restoration of normal operations, minimizing downtime, and reducing the likelihood of recurrence.

Additionally, the computing system 102 is configured for outputting the graphical representation, the determined one or more anomalies and the determined one or more corrective actions on a user interface of a user device 108.

Although, FIG. 1 illustrates the computing system 102 connected to one technical installation 114 via the network 104, one skilled in the art can envision that the computing system 102 may be connected to several technical installations located at different locations via the network 104.

FIG. 2 is a block diagram of a computing system 102 such as those shown in FIG. 1, depicting various components to implement embodiments of the present invention. In FIG. 2, the computing system 102 includes a processor(s) 202, an accessible memory 204 (also referred herein as memory 204), a communication interface 206, a network interface 208, an input/output unit 210, and a bus 212.

The processor(s) 202, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The processor(s) 202 may also include embedded controllers, such as generic or programmable logic devices or arrays, application specific integrated circuits, single-chip computers, and the like. The processor(s) 202 may also include one or more AI accelerators that can perform AI related processing using input data. Although referenced as an AI accelerator, it is sometimes referred as a neural network accelerator (NNA), neural network chip or hardware, AI processor, AI chip, and the like. The AI accelerator(s) can perform AI related processing to output or provide output data, according to the input data and/or parameters. An AI accelerator can include and/or implement one or more neural networks (e.g., artificial neural networks), and/or one or more storage devices.

Each of the above-mentioned elements or components is implemented in hardware, or a combination of hardware and software. For instance, each of these elements or components can include any application, program, library, script, task, service, process or any type and form of executable instructions executing on hardware such as circuitry that can include digital and/or analog elements (e.g., one or more transistors, logic gates, registers, memory devices, resistive elements, conductive elements, capacitive elements).

The memory 204 may be non-transitory volatile memory and non-volatile memory. The memory 204 may be coupled for communication with the processor(s) 202, such as being a computer-readable storage medium. The processor(s) 202 may execute machine-readable instructions and/or source code stored in the memory 204. A variety of machine-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 204 includes a multimodal graph generation module 112 stored in the form of machine-readable instructions on any of the above-mentioned storage media and may be in communication with and executed by the processor(s) 202.

When executed by the processor(s) 202, the multimodal graph generation module 112 causes the processor(s) 202 to obtain input datasets associated with assets 110A-N in the technical installation 114 from the plurality of data sources 106A-N. The input datasets comprise a multi-modal data associated with the assets 110A-N in the technical installation 114. The multi-modal data corresponds to one or more data formats. The input datasets comprise asset configurations, asset operational conditions such as usage patterns, maintenance history, environmental conditions, asset measurement data, asset number, asset manufacturer details, asset type, asset model identifier and the like. The input datasets may be obtained at real-time from the plurality of data sources 106A-N. The input datasets may be obtained using the one or more APIs, or via a communication link, or data streaming platforms, edge gateways, Internet of Things (IoT) network, cloud services, or the like.

Further, the multimodal graph generation module 112 causes the processor(s) 202 to identify a type of data format associated with each of the input datasets by pre-processing the obtained input datasets using one or more pre-processing models. Furthermore, the multimodal graph generation module 112 causes the processor(s) 202 to determine a data transformation model applicable to the identified type of data format using an Artificial Intelligence (AI)-based data transformation model. Furthermore, the multimodal graph generation module 112 causes the processor(s) 202 to transform each of the obtained input datasets into a target data format based on the determined data transformation model. Furthermore, the multimodal graph generation module 112 causes the processor(s) 202 to generate a graphical representation corresponding to the technical installation 114 based on the transformed input datasets. The graphical representation comprises a plurality of nodes representing a plurality of assets 110A-N and artifacts within the technical installation 114. Each of the plurality of nodes are connected using one or more connection paths. Furthermore, the multimodal graph generation module 112 causes the processor(s) 202 to determine one or more anomalies associated with the plurality of assets 110A-N and the artifacts of the technical installation 114 based on the generated graphical representation using one or more Large Language Models (LLMs). Additionally, the multimodal graph generation module 112 causes the processor(s) 202 to determine one or more corrective actions for rectifying the determined one or more anomalies based on an Artificial Intelligence (Al)-based action model. Moreover, the multimodal graph generation module 112 causes the processor(s) 202 to output the graphical representation, the determined one or more anomalies and the determined one or more corrective actions on a user interface of a user device 108A-N.

In an example embodiment, the multimodal graph generation module 112 causes the processor(s) 202 to obtain a user prompt for identifying a state and performance of the plurality of assets 110A-N based on the generated graphical representation. The user prompt comprises one or more questions associated with the state and the performance of the plurality of assets 110A-N. The performance of plurality of assets 110A-N comprises operational efficiency, health and condition monitoring, energy consumption, predictive maintenance indicators, quality control, economic performance, environmental impact, safety and compliance, and the like. The multimodal graph generation module 112 causes the processor(s) 202 to generate a response to the user prompt by applying the generated user prompt to the one or more Large Language Models. The response comprises the determined one or more anomalies and the determined one or more corrective actions.

In a preferred embodiment, in generating the response to the user prompt by applying the generated user prompt to the one or more large language models, the multimodal graph generation module 112 causes the processor(s) 202 to identify an intent within the user prompt by extracting one or more keywords existing in the one or more questions. Further, the multimodal graph generation module 112 causes the processor(s) 202 to determine one or more sub-graphs within the generated graphical representation based on the identified intent. More specifically, the multimodal graph generation module 112 causes the processor(s) 202 to determine one or more relationships between the plurality of assets 110A-N within the determined one or more sub-graphs based on the identified intent and the one or more keywords. Further, the multimodal graph generation module 112 causes the processor(s) 202 to generate a context for the response by correlating the determined one or more relationships between the plurality of assets. Furthermore, the multimodal graph generation module 112 causes the processor(s) 202 to apply the generated context as an input to the one or more large language models. Additionally, the multimodal graph generation module 112 causes the processor(s) 202 to generate the response to the user prompt based on results of the one or more large language models.

In another preferred embodiment, in transforming each of the obtained input datasets into the target data format based on the determined data transformation model, the multimodal graph generation module 112 causes the processor(s) 202 to classify the obtained input datasets into a plurality of data categories based on the type of data format. Further, the multimodal graph generation module 112 causes the processor(s) 202 to extract a first set of features associated with the obtained input datasets based on the classification. The extracted first set of features comprises spectral features and temporal features. Furthermore, the multimodal graph generation module 112 causes the processor(s) 202 to generate one or more embeddings for the extracted first set of features using determined data transformation model. The determined data transformation model comprises one of artificial intelligence models and foundational models. The one or more embeddings comprises multi-modal embeddings, text embeddings, spectral embeddings, and temporal embeddings. Furthermore, the multimodal graph generation module 112 causes the processor(s) 202 to transform each of the obtained input datasets into the target data format based on the generated one or more embeddings.

In yet another preferred embodiment, in generating the graphical representation corresponding to the technical installation based on the transformed input datasets, the multimodal graph generation module 112 causes the processor(s) 202 to determine a type of modality associated with the obtained input datasets. Furthermore, the multimodal graph generation module 112 causes the processor(s) 202 to extract a second set of features from each of the obtained input datasets based on the determined type of modality. The second set of features comprises asset-specific features and contextual features. The multimodal graph generation module 112 causes the processor(s) 202 to extract metadata references from each of the obtained input datasets based on the determined type of modality. Furthermore, the multimodal graph generation module 112 causes the processor(s) 202 to identify common features across the plurality of modalities by comparing the extracted second set of features from one modality with corresponding set of features of remaining modalities. Furthermore, the multimodal graph generation module 112 causes the processor(s) 202 to establish the one or more relationships between the obtained input datasets corresponding to plurality of modalities using the identified common features across the plurality of modalities. Moreover, the multimodal graph generation module 112 causes the processor(s) 202 to associate each of the identified common features with the plurality of nodes based on the extracted metadata references and the established one or more relationships.

In yet another preferred embodiment, the multimodal graph generation module 112 causes the processor(s) 202 to determine a hierarchical level, a data object category and a node position level corresponding to the type of modality based on the identified common features, extracted metadata references and the established one or more relationships. Further, the multimodal graph generation module 112 causes the processor(s) 202 to associate each of the identified common features of specific modality with the plurality of nodes based on the determined hierarchical level, the data object category, and the node position level. Furthermore, the multimodal graph generation module 112 causes the processor(s) 202 to generate a linked representation between each of the plurality of modalities based on the association.

In an aspect of the preferred embodiment, in generating the graphical representation corresponding to the technical installation 114 based on the transformed input datasets, the multimodal graph generation module 112 causes the processor(s) 202 to identify a number of assets and the artifacts corresponding to the assets 110A-N within the technical installation 114 based on the transformed input datasets. The artifacts correspond to information and parameters associated with the assets 110A-N. Further, the multimodal graph generation module 112 causes the processor(s) 202 to correlate each of the identified number of the assets 110A-N with the artifacts based on the metadata references. Furthermore, the multimodal graph generation module 112 causes the processor(s) 202 to determine a context between each of the number of the assets 110A-N and the artifacts corresponding to the assets 110A-N based on the correlation. Further, the multimodal graph generation module 112 causes the processor(s) 202 to determine the one or more relationships between each of the number of the assets 110A-N and the artifacts based on the determined context. Further, the multimodal graph generation module 112 causes the processor(s) 202 to generate the plurality of nodes corresponding to the number of the assets 110A-N. Furthermore, the multimodal graph generation module 112 causes the processor(s) 202 to generate the one or more connection paths connecting each of the generated plurality of nodes based on the determined one or more relationships. Additionally, the multimodal graph generation module 112 causes the processor(s) 202 to generate the graphical representation corresponding to the technical installation 114 based on the generated plurality of nodes and the generated one or more connection paths.

In another aspect of the preferred embodiment, in generating the graphical representation corresponding to the technical installation 114 based on the transformed input datasets, the multimodal graph generation module 112 causes the processor(s) 202 to determine the plurality of modalities associated with the obtained input datasets. Further, the multimodal graph generation module 112 causes the processor(s) 202 to generate the plurality of nodes based on the determined plurality of modalities. Further, the multimodal graph generation module 112 causes the processor(s) 202 to determine a subset of nodes from among the generated plurality of nodes comprising semantically similar datasets. The subset of nodes is represented as vectors positioned closer in a vector space. Further, the multimodal graph generation module 112 causes the processor(s) 202 to assign a hierarchical level for each of the plurality of nodes and the determined subset of nodes. Furthermore, the multimodal graph generation module 112 causes the processor(s) 202 to create one or more embeddings for each of the plurality of nodes and the determined subset of nodes based on the assigned hierarchical level using the one or more Large Language Models. The one or more embeddings correspond to a numerical representation of the plurality of nodes. Further, the multimodal graph generation module 112 causes the processor(s) 202 to merge the created one or more embeddings with the metadata references of the obtained input datasets. Additionally, the multimodal graph generation module 112 causes the processor(s) 202 to create one or more joint embeddings for each of the plurality of nodes and the determined subset of nodes. The one or more joint embeddings represent a combined embedding of the plurality of modalities.

In another preferred embodiment, the multimodal graph generation module 112 causes the processor(s) 202 to create a vector index corresponding to each of the created one or more joint embeddings for querying the plurality of nodes and the determined subset of nodes.

In an aspect of the preferred embodiment, the multimodal graph generation module 112 causes the processor(s) 202 to receive a query related to at least one asset 110 of the technical installation 114 from a user device 108. Further, the multimodal graph generation module 112 causes the processor(s) 202 to identify the closest node to the received query by traversing the vector index based on the one or more joint embeddings. Furthermore, the multimodal graph generation module 112 causes the processor(s) 202 to retrieve subsequent closest nodes to the query by hierarchically traversing neighboring nodes of the identified closest node. Further, the multimodal graph generation module 112 causes the processor(s) 202 to extract the first set of features associated with the identified closest node and the retrieved subsequent closest nodes by determining feature-level embeddings of the closest node and the retrieved subsequent closest nodes. Additionally, the multimodal graph generation module 112 causes the processor(s) 202 to generate a response to the received query using the one or more Large Language models. The response comprises the extracted first set of features associated with the identified closest node and the retrieved subsequent closest nodes.

In yet another preferred embodiment, in determining the one or more anomalies associated with the plurality of assets 110A-N and the artifacts of the technical installation 114, the multimodal graph generation module 112 causes the processor(s) 202 to correlate each of the plurality of nodes and the one or more connection paths within the generated graphical representation using a context. Further, the multimodal graph generation module 112 causes the processor(s) 202 to identify one or more patterns associated with the plurality of nodes and the one or more connection paths within the generated graphical representation based on the correlation. Furthermore, the multimodal graph generation module 112 causes the processor(s) 202 to determine a behavioral score and a performance score for each of the plurality of nodes within the generated graphical representation based on the identified one or more patterns. Furthermore, the multimodal graph generation module 112 causes the processor(s) 202 to map the determined behavioral score and the performance score with a predetermined threshold value. Additionally, the multimodal graph generation module 112 causes the processor(s) 202 to determine a deviation in the determined behavioral score and the performance score based on the mapping. Moreover, the multimodal graph generation module 112 causes the processor(s) 202 to determine the one or more anomalies associated with the plurality of assets 110A-N and the artifacts of the technical installation 114 based on the determined deviation.

In yet another aspect of the preferred embodiment, the multimodal graph generation module 112 causes the processor(s) 202 to predict an occurrence of an event within the technical installation 114 based on the determined behavioral score and the performance score. The event comprises the one or more anomalies. Furthermore, the multimodal graph generation module 112 causes the processor(s) 202 to apply the predicted occurrence of the event as an input to a trained Large Language Model (LLM). Furthermore, the multimodal graph generation module 112 causes the processor(s) 202 to generate a LLM response comprising a root cause for the predicted occurrence of the event.

The communication interface 206 is configured for establishing communication sessions between the one or more user device 108A-N, the one or more assets 110AN, and the computing system 102. The communication interface 206 allows the web applications running on the user devices 108A-N to import/export the input datasets, the graphical representation, the artifacts, the anomalies, the corrective actions, and other related information, into the computing system 102. In an embodiment, the communication interface 206 interacts with the interface at the user devices 108A-N for allowing the users to access the components of the one or more assets 110A-N and perform one or more actions. The network interface 208 helps in managing network communications between the one or more user device 108A-N, the one or more assets 110A-N, and the computing system 102.

The input-output unit 210 may include input devices a keypad, touch-sensitive display, camera (such as a camera receiving gesture-based inputs), and the like capable of receiving one or more input signals, such as user commands to process input datasets. Also, the input-output unit 210 may be a display unit for displaying a graphical user interface which visualizes the graphical representation, the asset performance data and also displays the status information associated with each set of actions performed on the assets 110A-N. The bus 212 acts as interconnect between the processor 202, the memory 204, and the input-output unit 210.

Those of ordinary skilled in the art will appreciate that the hardware depicted in FIG. 2 may vary for particular implementations. For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein. Instead, only so much of a computing system 102 as is unique to the present disclosure or necessary for an understanding of the present disclosure is depicted and described. The remainder of the construction and operation of the computing system 102 may conform to any of the various current implementation and practices known in the art.

FIG. 3 is a block diagram of a multimodal graph generation module 112, such as those shown in FIG. 1 and 2, capable of managing asset performance of one or more assets 110A-N, according to the embodiment of the present invention. In FIG. 3, the multimodal graph generation module 112 comprises a data preprocessing module 302, a data unified service module 304, a knowledge graph module 306, an anomalies determination module 308, an action determination module 310, a LLM module 312, and an output module 314.

The data preprocessing module 302 is configured to obtain input datasets associated with assets in a technical installation 114 from a plurality of data sources 106A-N. The input datasets comprise a multi-modal data associated with the assets 110A-N in the technical installation 114. The multi-modal data corresponds to one or more data formats. The multi-modal data comprises a plurality of data dimensions. The input datasets comprise a multimedia data, a tabular data, a text data, an audio data, a time series data, an engineering diagram layout design data, and the like. The plurality of data sources 106A-N comprises external data sources, and internal data sources. The input datasets comprise product visuals, heatmaps, tabular information, operation sounds, vibrations, product manuals, service reports, sensor data, engineering diagrams, such as for example, Piping and Instrumentation Diagram (P&ID) diagrams.

Further, data preprocessing module 302 is configured to identify a type of data format associated with each of the input datasets by pre-processing the obtained input datasets using one or more pre-processing models. The one or more pre-processing models comprises for example, but not limited to, Natural Language Processing (NLP) models, foundation models, multi-model embeddings, Convolutional Neural Networks (CNNs), Graph Neural Networks (GNNs), dimensionality reduction models, Generative Artificial Intelligence models, Hierarchical Graph Attention Networks, and the like. The type of the data format comprises for example, but not limited to, structured data formats, unstructured data formats, time-series data formats, image and visual data formats, acoustic and vibration data formats, control system data formats, and geospatial data formats.

The data unified service module 304 is configured to determine a data transformation model applicable to the identified type of data format using an Artificial Intelligence (AI)-based model. The data transformation model comprises one of artificial intelligence models and foundational models. The Artificial Intelligence (AI)-based model comprises a semantic model. The semantic model comprise for example, but not limited to, Data Exchange in the Process Industry (DEXPI), or embeddings model and the like. The data transformation model understands and refines the input datasets for the identified type of data format using AI based model. For example, image such as heat maps and maintenance photos may be represented using embeddings. Further, audio files may be captured as Mel Frequency Cepstral Coefficients (MFCC) representations and other sensor data may be captured using statistical measures such as for example, but not limited to, mean, median or using transformations such as for example, but not limited to, Fourier transformations.

Further, the data unified service module 304 is configured to transform each of the obtained input datasets into a target data format based on the determined data transformation model. The target data format may conform to any of the structured data formats, unstructured data formats, time-series data formats, image and visual data formats, acoustic and vibration data formats, control system data formats, geospatial data formats and the like.

In another preferred embodiment, in transforming each of the obtained input datasets into the target data format based on the determined data transformation model, the data unified service module 304 is configured to classify the obtained input datasets into a plurality of data categories based on the type of data format. The plurality of data categories comprises structured data category, unstructured data category, time-series data category, image and visual data category, acoustic and vibration data category, control system data category, and geospatial data category. Further, the data unified service module 304 is configured to extract first set of features associated with the obtained input datasets based on the classification. The extracted first set of features comprises spectral features and temporal features. Further, the data unified service module 304 is configured to generate one or more embeddings for the extracted first set of features using determined data transformation model. The determined data transformation model comprises one of artificial intelligence models and foundational model. The one or more embeddings comprises multi-modal embeddings, text embeddings, spectral embeddings, and temporal embeddings. Further, the method comprises transforming each of the obtained input datasets into the target data format based on the generated one or more embeddings.

In an example embodiment, the input datasets may be sourced from multiple sources, such as for example, the plurality of data sources 106A-N. Further, each of the input datasets may be of different modalities, including, for example, but not limited to, images, audio files, and sensor data. Each type of data is required to be represented appropriately in the graphical representation. For example, in case of an image data, images may be typically represented as multi-model embeddings in the graphical representation, such as for example, knowledge graph. One of an example approach is to use Convolutional Neural Networks (CNNs) to convert images into embeddings. These embeddings retain the essential features of the images and may be used to compare and analyze similar sub-graphs. Further, the image representation may also be stored as a textual representation from a semantic richness leveraged using for example, Vision Language foundation models. In case of a tabular data such as charts, graphs, and tables, such type of input datasets may also be transformed into multi-model embeddings. Techniques such as, for example, but not limited to, autoencoders or other dimensionality reduction methods may be used to transform a high-dimensional tabular data into a lower-dimensional representation that may be easily processed and analyzed.

Further, in case of an audio data, the audio data may be represented using for example, Mel Frequency Cepstral Coefficients (MFCCs) along with spectral features. Features and major deviations may be recorded on the graphical representation (also referred herein as knowledge graph) with meta data rich sensitivity information. The meta data rich sensitivity information comprises for example, but not limited to, a type of equipment, a time, a location, an upstream and a downstream connections, process details, operating conditions and the like.

In case of a textual data such as product manuals, service tickets, and SOPs, such data may be converted into text embeddings using for example, Natural Language Processing (NLP) techniques. These embeddings may capture the semantic meaning of the text. Further in case of time series data obtained from sensors, such data may be embedded using for example, time2vec models, which may capture temporal patterns in the data. The time series data may also feed into for example, Time Series Foundational Models (TSFM) to decipher insights such as patterns and trends. Further, time series features may be stored as representations of deviations with meta data intensive modeling.

In case of P&ID Diagrams, such diagrams may be represented by a separate asset graph, with each asset 110 represented as a node and the connections between them as edges. The sensors from these diagrams may link to the asset nodes in the enriched graph. This may be achieved by creating edges between the sensor nodes and the corresponding asset nodes, with the edge labels indicating the type of sensor and its location on the asset. This linking process allows for a holistic view of the asset 110 and its sensors, facilitating better analysis and decision-making.

In an example embodiment, the data transformation model decides the type of transformation process to be applied depending on the type of modality. For example, as described above, if the input dataset is a text data, Natural Language Processing (NLP) techniques are applied for transformation and if the input dataset is an audio dataset, then the MFCC feature extraction techniques are applied. Therefore, the data transformation model varies for each type of modality. Furthermore, the kind of transformation applied to each type of modality varies from each other. Therefore, the target data formats upon transformation may comprise of MFCC features, text or multi modal embeddings, temporal and spatial features, and the like.

The data unification service module 304 is configured for ensuring that all datasets, regardless of its source or modality, is represented in a consistent and standardized way. This process may involve data cleaning, normalization, and transformation. The data cleaning techniques comprises for example, but not limited to, outlier removal with quartiles, feature importance checks, normalization with standard scaler, regularization and the like. Further, the modalities are transformed independently using embeddings and then represented in the same latent space thus enabling unification.

Furthermore, the knowledge graph module 306 is configured to generate a graphical representation corresponding to the technical installation 114 based on the transformed input datasets. The graphical representation comprises a plurality of nodes representing a plurality of assets 110A-N and artifacts within the technical installation 114. Each of the plurality of nodes are connected using one or more connection paths. The graphical representation may correspond to a knowledge graph representation.

In another preferred embodiment, in generating the graphical representation corresponding to the technical installation 114 based on the transformed input datasets, the knowledge graph module 306 is configured to determine a type of modality associated with the obtained input datasets. Further, the knowledge graph module 306 is configured to extract a second set of features from each of the obtained input datasets based on the determined type of modality. The second set of features comprises asset-specific features and contextual features. The asset-specific features are characteristics or properties directly related to an individual asset 110 within the technical installation 114. These features are intrinsic to the asset 110 and typically include parameters or data specific to its operation, condition, or performance. For example, for a pump in a technical installation 114, the asset-specific features may include flow rate, pressure, vibration levels, and energy consumption. The contextual features refer to features that describe the broader environment or operational context in which the asset 110 operates. These features provide situational or relational information that helps to understand the role or performance of the asset 110 within the overall system. For example, for the same pump, contextual features may include ambient temperature, upstream/downstream equipment status, and operational load conditions.

The knowledge graph module 306 is further configured to extract metadata references from each of the obtained input datasets based on the determined type of modality. The metadata references links datasets to specific nodes or assets based on identifying details. The metadata references are identifiers or attributes that provide additional information about the datasets corresponding to different modalities. These references help in associating and linking the data to specific assets 110, conditions, or relationships in the system. For example, for input datasets, metadata references may include Asset ID, timestamp, location data, or data source type (e.g., sensor data, maintenance logs) or the like.

Furthermore, the knowledge graph module 306 is configured to identify common features across the plurality of modalities by comparing the extracted second set of features from one modality with corresponding set of features of remaining modalities. Furthermore, the knowledge graph module 306 is configured to establish the one or more relationships between the obtained input datasets corresponding to plurality of modalities using the identified common features across the plurality of modalities. Additionally, the knowledge graph module 306 is configured to associate each of the identified common features with the plurality of nodes based on the extracted metadata references and the established one or more relationships.

Further, the knowledge graph module 306 is configured to determine a hierarchical level, a data object category and a node position level corresponding to the type of modality based on the identified common features, extracted metadata references and the established one or more relationships. The hierarchical level in the context of components or assets 110 with different modalities refers to the organization or ranking of these elements based on their structural, functional, or operational relationships within a system. The hierarchical level provides a layered framework that defines how assets 110 or components, belonging to various modalities, are interconnected, and positioned in relation to one another. For example, modality Types may comprise sensor modality, log modality, control modality and the like. The sensor modality comprises, for example, but not limited to, devices providing real-time data (e.g., temperature sensors, pressure sensors). The log modality comprises, for example, but not limited to, historical operational data (e.g., maintenance logs, error reports). The control modality may comprise, for example, but not limited to, actuators or systems executing commands (e.g., robotic arms, valves). In this example embodiment, the hierarchical levels may include system level (topmost hierarchy) representing the entire technical installation 114 or ecosystem. The system level comprises an integrated view of assets 110 across all modalities. For example, a production line managing real-time monitoring, historical logging, and control execution. Further, the hierarchical levels may include subsystem level (Mid-Hierarchy) representing major subsystems within the system. This level may combine modality-specific data relevant to each subsystem. For example, a machine in the production line, aggregating sensor readings, operational logs, and control actions. Further, the hierarchical levels may include component or asset Level (Lowest Hierarchy) representing individual assets 110 or components. Each modality may be represented individually or in detail. For example, a temperature sensor (sensor modality), an actuator (control modality), or a specific maintenance log entry (log modality).

In an example embodiment, the data object category classifies the type or nature of the data objects (also referred herein as nodes or assets 110) represented in the knowledge graph. The data object category helps in grouping and organizing the data objects based on their role, functionality, or data source. Examples of data object categories may comprise sensor data objects for representing raw or processed data collected from physical sensors. In KG, such nodes represent sensors, their data streams, or sensor metadata (e.g., location, calibration status). Some other examples of data object categories comprise control data objects for representing systems or devices that execute actions based on control inputs. In KG, such nodes represent actuators, control signals, or operational states. Further, some other examples of data object categories comprise historical/Log Data objects representing time-stamped records of system or asset operations. In KG, such nodes capture historical events, annotated with time, severity, and associated components. Further, other examples of data object categories comprise configuration data objects for representing settings or parameters defining system behavior. In KG, such nodes store configurations for components, often linked to corresponding assets. Furthermore, some other examples of data object categories comprise asset metadata objects capturing descriptive information about assets 110 in the system. In KG, the metadata nodes describe and annotate specific assets 110 or components. Some other examples of data object categories comprise geospatial data objects for representing location-based or spatial data. In KG, such nodes represent geospatial features linked to assets 110 or operational areas. Some other examples of data object categories comprise process/workflow data objects for capturing the structure and steps of processes or workflows. In KG, such nodes represent workflows or processes, including relationships between tasks and assets. Additionally, some other examples of data object categories comprise operational state data objects for representing the current or past operational states of assets 110. In KG, such nodes represent the dynamic states of assets 110, connected to time-series or sensor data. Some other examples of data object categories may include other types of categories. Each data object category may be derived from different types of input datasets (modalities) such as sensor readings, logs, documents, and configurations. KGs connect these categories through relationships, enabling cross-modal analysis (e.g., linking sensor data to maintenance logs and operational workflows).

In an example embodiment, the node position level refers to the specific location or placement of a node (representing an asset, object, or data entity) within the knowledge graph. The node position level denotes the node's connectivity, relationships, and role within the network structure of the graph. In a knowledge graph, a node position may indicate that the node may be a root node (top of a hierarchy, e.g., representing the overall system), or an intermediate node (e.g., representing a subsystem or device), or a leaf node (e.g., representing an individual component like a sensor or actuator).

Furthermore, the knowledge graph module 306 is configured to associate each of the identified common features of specific modality with the plurality of nodes based on the determined hierarchical level, the data object category, and the node position level. Furthermore, the knowledge graph module 306 is configured to generate a linked representation between each of the plurality of modalities based on the association. The linked representation comprises a knowledge graph representation.

In an aspect of the preferred embodiment, in generating the graphical representation corresponding to the technical installation 114 based on the transformed input datasets, the knowledge graph module 306 is configured to identify a number of assets 110 and the artifacts corresponding to the assets 110 within the technical installation 114 based on the transformed input datasets. The artifacts correspond to information and parameters associated with the assets 110. The information may refer to descriptive, categorical, or semantic data associated with assets 110. This may originate from different modalities and provides insights into the identity, characteristics, and contextual details of the assets 110. For example, static information comprises asset name, type, model, or category (e.g., "Pump A-101" or "Sensor, Type B"), specifications like manufacturer details, serial numbers, and material composition. Further, the information may comprise historical information maintenance logs, performance history, and records of prior faults or downtime or the like. The information may comprise dynamic information such as for example, current operational state (e.g., "Running," "Fault Detected," or "Idle"), role or purpose of the asset within the system (e.g., "Regulates flow between X and Y").

In an example embodiment, the parameters may be measurable or observable attributes that describe the behavior, performance, and status of an asset 110. Such parameters are modality-specific and may be either static (unchanging) or dynamic (changing over time). The parameters may include time-Series Data, image data, textual Data, graph Data, behavioral parameters, performance degradation trends (e.g., "Efficiency drops by 10% after 100 hours of operation"), status parameters, operational status (such as for example, but not limited to, "Active," "Idle," "Faulted," "Under Maintenance"), and health status (such as for example, but not limited to, "Optimal," "Degraded," "Critical" or the like).

The knowledge graph module 306 is configured to correlate each of the identified number of the assets 110 with the artifacts based on the metadata references. The knowledge graph module 306 is configured to determine a context between each of the number of the assets 110 and the artifacts corresponding to the assets 110 based on the correlation. The context refers to the interrelationships, situational relevance, and dependencies among assets 110 and their associated artifacts, derived from different modality datasets. The context helps establish a semantic framework that explains how an asset functions or interacts within the system. Examples by contextual dependency may include temporal context, relational context, behavioral context, environmental context, and the like. The temporal context comprises for example, "Valve 3 was closed during maintenance on Tank A, causing Pump 1 to overheat.", the relational context for example, comprises "Sensor Y monitors the output of Pump X and alerts Controller Z if flow rate drops below 15 liters/min", the behavioral context for example comprises "When System Temperature exceeds 80°C, Pump A slows down by 20% to prevent overheating", the environmental context comprises for example "Pump B performance decreases under high humidity conditions (above 90%)" and the like.

Further, the knowledge graph module 306 is configured to determine the one or more relationships between each of the number of the assets 110 and the artifacts based on the determined context. Furthermore, the knowledge graph module 306 is configured to generate the plurality of nodes corresponding to the number of the assets 110. Additionally, the knowledge graph module 306 is configured to generate the one or more connection paths connecting each of the generated plurality of nodes based on the determined one or more relationships. Furthermore, the knowledge graph module 306 is configured to generate the graphical representation corresponding to the technical installation 114 based on the generated plurality of nodes and the generated one or more connection paths.

In an example embodiment, in generating the graphical representation corresponding to the technical installation 114 based on the transformed input datasets, the knowledge graph module 306 is configured to determine the plurality of modalities associated with the obtained input datasets. Further, the knowledge graph module 306 is configured to generate the plurality of nodes based on the determined plurality of modalities. Furthermore, the knowledge graph module 306 is configured to determine a subset of nodes from among the generated plurality of nodes comprising semantically similar datasets. The subset of nodes is represented as vectors positioned closer in a vector space. The vector may be for example, but not limited to, a numerical representation of an entity (e.g., a dataset, node, or modality) in a multi-dimensional space. The vector is typically used to encode information related to the properties, attributes, or relationships of that entity in a structured and comparable way. In this scenario, each node or dataset is converted into a vector to enable semantic comparison and clustering. For example, two nodes representing datasets with similar metadata, modality, or behavior might have vectors with close values, indicating similarity. For example, a node representing a temperature sensor may have a vector like [0.8, 0.3, 0.5], where each dimension corresponds to a specific attribute such as modality, location, or functional role.

In an example embodiment, a vector space may be referred to as a mathematical space where vectors are positioned in a multi-dimensional coordinate system. In the context of knowledge graphs and modality datasets, the vector space organizes these vectors based on their similarity or relevance to certain features or attributes. The vector space allows subsets of nodes (e.g., semantically similar datasets) to be identified based on the proximity of their vectors. Nodes with similar datasets or shared characteristics may be positioned closer to one another in the vector space, while dissimilar nodes will be farther apart. For example, vectors for temperature sensors might cluster in one region of the vector space, while vectors for vibration sensors form a different cluster. Dimensions in the vector space may represent attributes such as, for example, but not limited to, modality type, asset hierarchy, or functional dependencies.

Further, the knowledge graph module 306 is configured to assign a hierarchical level for each of the plurality of nodes and the determined subset of nodes. Furthermore, the knowledge graph module 306 is configured to create one or more embeddings for each of the plurality of nodes and the determined subset of nodes based on the assigned hierarchical level using the one or more Large Language Models. The one or more embeddings correspond to a numerical representation of the plurality of nodes. Further, the method comprises merging the created one or more embeddings with the metadata references of the obtained input datasets. Furthermore, the knowledge graph module 306 is configured to create one or more joint embeddings for each of the plurality of nodes and the determined subset of nodes. The one or more joint embeddings represent a combined embedding of the plurality of modalities. The joint embeddings may be combined numerical representations of entities derived from multiple modalities. The joint embeddings unify the information from different sources into a single embedding, capturing both the shared and distinct characteristics of each modality. The method involves creating embeddings for each node based on its hierarchical level and metadata. These embeddings are then merged with additional embeddings from other modalities to form joint embeddings. Joint embeddings provide a holistic representation of each node by integrating data from multiple modalities, such as text, images, time-series data, or metadata references. In an example embodiment, a joint embedding for a node representing a pump might combine textual data from maintenance logs (e.g., Log_Vector [0.2, 0.8, 0.4]), time-series data from operational sensors (e.g., Sensor_Vector [0.5, 0.6, 0.7]), and metadata related to its hierarchical role (e.g., Metadata_Vector [0.1, 0.9, 0.3]). The combined embedding may be Joint_Embedding [0.27,0.77,0.47].

In a preferred embodiment, the knowledge graph module 306 is configured to create a vector index corresponding to each of the created one or more joint embeddings for querying the plurality of nodes and the determined subset of nodes. The vector index may be a data structure designed to store and organize the vectors (in this case, the joint embeddings) in a way that enables efficient querying, retrieval, and comparison of nodes or subsets of nodes within the knowledge graph. The vector index is optimized for operations such as, for example, but not limited to, nearest neighbor search, clustering, and semantic similarity queries. The algorithms such as for example, but not limited to, k-d trees, Annoy (Approximate Nearest Neighbors), or HNSW (Hierarchical Navigable Small World) may be used to build the vector index for efficient querying. The vector index is associated with the joint embeddings of the nodes in the knowledge graph. Each node's joint embedding is stored in the vector index, making it possible to query the graph for nodes that are semantically or contextually similar based on their multi-modal representations. By leveraging the vector index, the computing system 102 may quickly identify nodes or subsets of nodes that share similar characteristics, relationships, or hierarchical levels.

In an example embodiment, the LLM module 312 is configured to receive a query related to at least one asset 110 of the technical installation 114 from a user device 108. The query may comprise a set of questionnaires relating to the one or more assets 110A-N in the technical installation 114. Further, the knowledge graph module 306 is configured to identify a closest node to the received query by traversing the vector index based on the one or more joint embeddings. Further, the knowledge graph module 306 is configured to retrieve subsequent closest nodes to the query by hierarchically traversing neighboring nodes of the identified closest node. Furthermore, the knowledge graph module 306 is configured to extract the first set of features associated with the identified closest node and the retrieved subsequent closest nodes by determining feature-level embeddings of the closest node and the retrieved subsequent closest nodes. The feature-level embedding may be a numerical representation of individual features (attributes or properties) of a node in the knowledge graph. Unlike joint embeddings, which represent the combined characteristics of a node or dataset, feature-level embeddings focus on the granular, feature-specific details, enabling a more precise analysis and retrieval. Furthermore, the LLM module 312 is configured to generate a response to the received query using the one or more Large Language models. The response comprises the extracted first set of features associated with the identified closest node and the retrieved subsequent closest nodes.

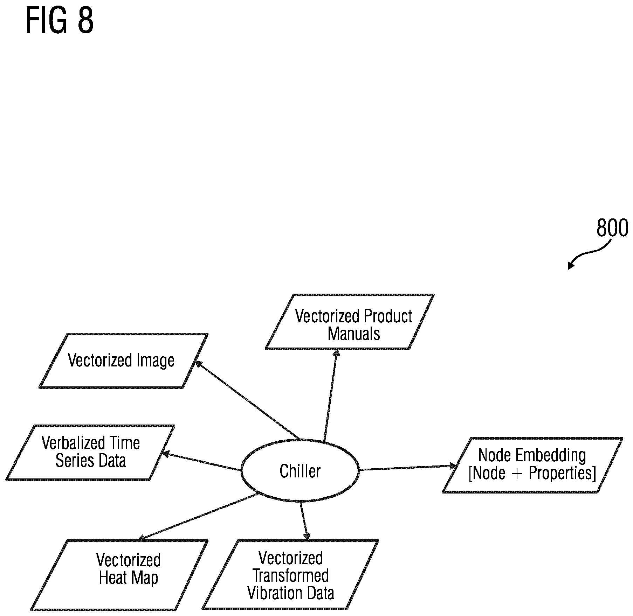

In an example embodiment, once the above properties are fed into the graph, an embedding is created at every node. An embedding is a numerical representation of a data object, such as text, image, audio, or document. Data that are semantically similar or related are represented by vectors that are closer to each other in this vector space. Embeddings capture semantic meaning of the data. In a preferred embodiment, a hierarchical approach is followed by which multiple levels of information are added progressively and embeddings are created at each level. These embeddings are created using a multimodal LLM. The embedding signifies a joint representation of all dimensions of the node. This is the crucial step that helps in holistically representing the technical installation 114 within a knowledge graph. For every asset node in the graph, a joint embedding is created. Joint embedding is a combined embedding of the embeddings of the individual dimensions. Joint embeddings are created for every asset in the graph. This is referred as node embeddings (as shown in FIG. 8). Once embeddings are created, a vector index for querying the nodes is created based on the joint embeddings of each node. For a given query, the closest node is first fetched from the graph. Following this hierarchically, the neighborhood is traversed to obtain the next closest node. Once first level nodes are captured, the individual feature level embeddings are then matched to obtain the details of the features corresponding to the node. These dimensions are then returned as a result of the query.

Consequently, the method unifies all the modalities of assets 110A-N of the technical installation 114 as an n-dimensional vector thus representing information in a common embedding space. N dimensions is divided into, for example, six different modalities such that each modality is represented by a subset of n dimensions. The influence of every modality is critical to place the asset 110 in such an embedding space. This allows for easy search, similarity checks and retrievals later. Along with the modalities, the occurrence of an event is also modelled into the embedding space.

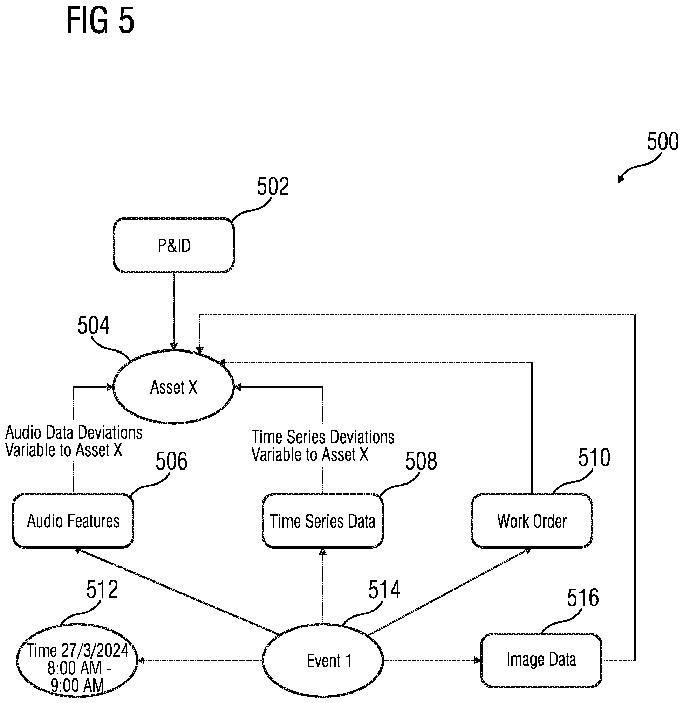

Each event as represented in FIG. 5 (anomaly, startup/shutdown, process failure and the like) uniquely influences the embedding of the assets 110. This consolidated embedding is then smartly connected with the asset node as node embedding represented in FIG. 5. This now enables a clear connection between the metadata of the KG and the associated embeddings.

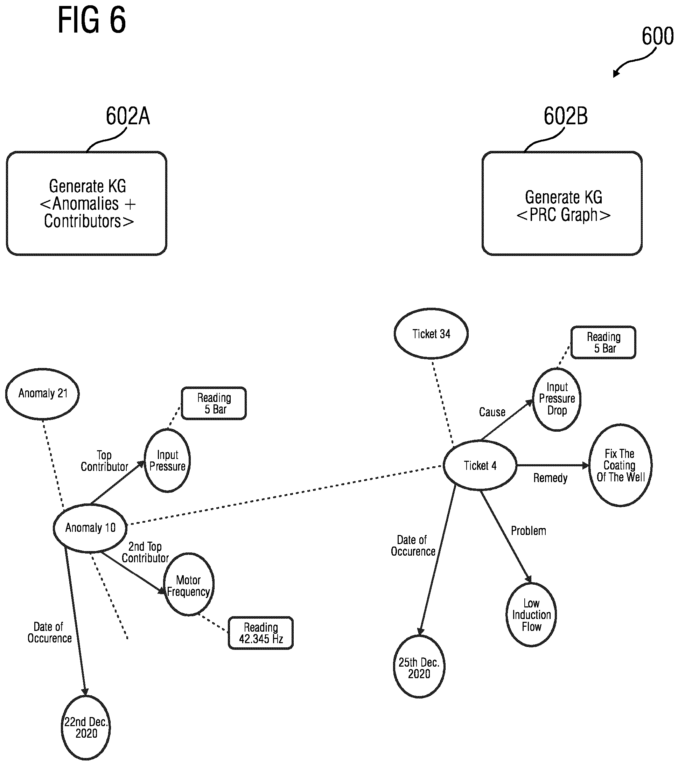

This process enables a Sub graph extraction which refers to similar behavior of patterns on audio data in embedding representation, time series data for different assets 110, specifically for deviation (defined at asset level and includes temporal metadata). The sub graph is generated based on work order tickets, image embeddings and assets described P&ID asset graph. The process further generates linked representation of previous deviations which helps in identifying anomalies in the new data and also for predictive and preventive maintenance steps and process based on the best match from previous anomalies modeled in the graph (as shown in FIG. 6).

In an example embodiment, for a query about a "temperature sensor," the knowledge graph module 306 identifies the node that best matches the semantic and contextual representation of a temperature sensor. After identifying a specific temperature sensor, the knowledge graph module 306 retrieves related nodes, such as other sensors in the same installation or nodes representing the environment they monitor. The knowledge graph module 306 then calculates feature-level embeddings for the identified closest node and its neighbors to determine the first set of features associated with these nodes. For the temperature sensor node, these first set of features may comprise "operating temperature," "sensor type," "status," "last calibration date" and the like. Each feature may be embedded as a numerical representation, capturing its unique characteristics and relationship to the query. The LLM module 312 may use the extracted features to generate a detailed, context-aware response to the query. An example LLM response may comprise "The temperature sensor operates within -40°C to 85°C, is of type RTD, is currently active, and was last calibrated on 15th Jan 2025. Related sensors include pressure and humidity sensors in the same installation".

In an example embodiment, consider a factory floor environment where data from various modalities is present. These modalities include images (depicting plant setups and equipment details and the like), tabular or Excel data (containing data records, inventory, and service history and the like), audio data (capturing sounds from machinery or individual equipment), time-series data (generated by sensors and equipment), textual data (comprising historical incident records, standard operating procedures, service reports, and logs and the like), and Piping and Instrumentation Diagrams (P&ID) (representing the plant layout with equipment and their upstream and downstream connections).

To create a comprehensive graphical representation of the plant or technical installation 114, the relationships between assets 110A-N and these diverse data modalities are required to be established to understand the context of each asset 110.

To generate such a unified graphical representation, the process begins by extracting layout and asset images, including their geolocation and KKS tags (`KKS tags' refer to unique identification codes assigned to assets 110A-N or equipment in the technical installation 114). These KKS tags are then matched with corresponding tags in the P&ID layout, linking the image data to the P&ID representation. This linkage establishes a connection between the spatial and schematic representations of the assets 110A-N.

Further, the images may also depict specific processes that are associated with textual descriptions. These textual descriptions may include references to Standard Operating Procedure (SOP) documents, manuals, and other process-specific information. Through asset-level and process-level identification, this textual context is linked to both the image data and the SOP documents. This approach creates an integrated representation that unifies data from all modalities, enabling a holistic understanding of the technical installation 114 and its operational context.

Therefore, at the first stage, the image data has been integrated with the P&ID (Piping and Instrumentation Diagrams) and the textual information from the SOP (Standard Operating Procedure) manuals. In the second stage, the asset names identified in the combined image and P&ID representation are further associated with corresponding time-series data. This allows the computing system 102 to monitor the impact of time-series variables, such as sensor readings, on both upstream and downstream components related to the identified assets 110A-N. Additionally, metadata associated with the time-series data is encoded within this representation, enabling more contextual insights into temporal variations and trends.

In the third stage, the audio data is incorporated into the previously generated representation. The audio data is localized to specific asset 110 and is paired with metadata related to the asset 110 it pertains to. With the existing integration of image, P&ID, and time-series data, the audio data adds another layer of insight at the asset level. Furthermore, audio features are processed to generate embeddings that represent statistical deviations over time. These embeddings may detect deviations from normal behavior by leveraging model inferencing, which learns normal patterns and flags deviations. The knowledge graph module 306 also generates a feature vector for the entire time period, which is used as a reference within the graph representation.

To achieve an integrated graphical representation, the audio feature vectors are combined with a Convolutional Neural Network (CNN) layer, which acts as an ensemble layer. This layer synthesizes the feature dimensions from audio, image, P&ID, and time-series data into a unified feature space for the asset 110.

The resulting integrated representation enhances the computing system's 102 ability to identify early warning signals from the assets 110A-N, providing a comprehensive view of anomalies or deviations. By combining data from images, P&ID diagrams, time-series data, and audio features, the computing system 102 enables richer contextual understanding for AI workflows. These workflows may operate in a closed-loop system or autonomously for anomaly detection, delivering actionable insights to plant operators and users for improved decision-making and operational efficiency.

In the next stage, a tabular data is incorporated into the existing representation of image, P&ID, and time-series data. The tabular data is treated as metadata that provides contextual information for various time periods and operational scenarios. For example, in a chiller plant setup, tabular data such as a Coefficient of Performance (COP) curve may serve as a reference. This curve, stored as metadata, is associated with specific assets 110A-N and events, enhancing the computing system's 102 ability to interpret performance variations.

One example method to derive insights from the tabular data is through a time-series verbalization, where the data unification service module 304 is configured to transform a raw numerical data into descriptive narratives or summaries. These narratives facilitate a deeper understanding of the tabular data and enable the generation of meaningful associations with entities, such as assets 110A-N or events, within the environment 100.

In the subsequent stage, the textual data is added to the representation. This includes diverse sources such as Service Reports, SOP manuals, or other documentation. The service reports are integrated at both the event and asset levels to provide historical information about past issues, repairs, and maintenance actions. The SOP Manuals represent processes related to specific assets 110A-N and provides recommendations for responding to certain events or anomalies. The other documentation comprises detailing the functional aspects and operational guidelines for the assets 110A-N, ensuring a comprehensive understanding of their roles within the technical installation 114.

The integration of the textual data involves generating associations between different textual elements. For example, a PRC (Problem, Remedy, and Cause) graph derived from service reports may establish relationships between identified problems, suggested remedies, and their root causes. These associations provide actionable insights and facilitate a richer understanding of the operational context for each asset 110 or event.

By combining data from images, P&ID diagrams, time-series readings, tabular datasets, and textual documents, the knowledge graph module 306 creates a holistic graphical representation. This representation enables plant operators and AI workflows to identify complex relationships and make informed decisions with a broader and more detailed context.

The anomalies determination module 308 is configured for determining one or more anomalies associated with the plurality of assets and the artifacts of the technical installation based on the generated graphical representation using one or more Large Language Models (LLMs). Further, the term "anomalies" refers to abnormal or unexpected behaviours in the operation of the industrial assets 110A-N, often detected through the analysis of sensor data. These anomalies may arise due to sudden changes in sensor behaviour, which may be categorized into step changes or ramp changes. In some cases, an anomaly may indicate a potential malfunction or shutdown of the asset 110 or the overall technical installation 114, thus requiring immediate attention and resolution.

The one or more anomalies comprises operational anomalies, process anomalies, sensor anomalies, data anomalies, environmental anomalies, and visual anomalies. The one or more one or more Large Language Models (LLMs) comprises GPT-based models (e.g., OpenAI's GPT series), Bidirectional Encoder Representations from Transformers (BERT), and Text-to-Text Transfer Transformer (T5).

In some example embodiments, the operational anomalies pertain to deviations in the expected operation of assets 110. For example, a pump operating at reduced efficiency due to a worn-out impeller, a conveyor belt experiencing intermittent stoppages caused by misaligned rollers, or a motor overheating due to excessive load. Such anomalies may disrupt production schedules and may lead to unexpected downtime if not addressed promptly. Further, the process anomalies may occur when the overall process flow deviates from its designed parameters. For instance, a chemical reactor operating outside its optimal temperature or pressure range, resulting in suboptimal product quality, or an industrial mixer producing inconsistent mixtures due to variations in the input material. Another example is a boiler exhibiting delayed ignition, impacting the energy efficiency of a system. Furthermore, the sensor anomalies may relate to faulty or inaccurate readings from sensors monitoring the system. Examples may include but not limited to a temperature sensor providing erratic values due to calibration drift, a flow sensor registering zero flow despite normal operation because of obstruction or sensor failure, or a vibration sensor generating false alarms due to electromagnetic interference. Furthermore, data anomalies may involve errors or inconsistencies in data generated or stored in the computing system 102. Examples may include, but not limited to, missing data points in a time-series dataset, incorrect timestamps leading to misaligned event correlations, or duplicate entries in inventory records that distort analysis. Data anomalies may compromise the accuracy of predictive models and decision-making systems. Furthermore, the environmental anomalies may arise due to external environmental factors affecting the asset 110. For example, excessive dust accumulation on equipment in a factory leads to overheating, high humidity levels causing corrosion in electrical components, or sudden temperature fluctuations impacting the efficiency of refrigeration systems. Such anomalies often require immediate mitigation to prevent long-term damage.

Furthermore, the visual anomalies relate to irregularities observable in images or video feeds from the asset 110. Examples include, but not limited to, discoloration of a heat exchanger, indicating scaling or fouling, cracks visible on the surface of a pipeline, suggesting structural weakness, or abnormal flame patterns in a furnace, signaling improper combustion. Automated image analysis systems often detect such anomalies to guide maintenance actions.

In yet another aspect of the preferred embodiment, in determining the one or more anomalies associated with the plurality of assets 110A-N and the artifacts of the technical installation 114, the anomalies determination module 308 is configured for correlating each of the plurality of nodes and the one or more connection paths within the generated graphical representation using a context. Further, the anomalies determination module 308 is configured for identifying one or more patterns associated with the plurality of nodes and the one or more connection paths within the generated graphical representation based on the correlation. The one or more patterns comprises recurring or identifiable sequences, relationships, or structures associated with nodes (assets 110) and connection paths in the generated graphical representation. The one or more patterns may represent a typical behavior, operational workflows, or dependencies within the system.

The anomalies determination module 308 identifies common patterns or features across different types of data. This process may help to create a more compact and efficient representation of the data. For example, similar patterns in audio and sensor data might be represented using the same set of features in the KG and also linking with the aspect of metadata references (specially on temporal aspects).

Furthermore, the anomalies determination module 308 is configured for determining a behavioral score and a performance score for each of the plurality of nodes within the generated graphical representation based on the identified one or more patterns. The behavioral score may refer to a metric quantifying how closely the observed behavior of a node (asset 110) aligns with its expected or standard operational behavior, derived from identified patterns. The performance score may be a metric assessing the efficiency or effectiveness of a node (asset 110) in fulfilling its intended purpose or operation, often based on measurable parameters like throughput, response time, or operational uptime. Furthermore, the anomalies determination module 308 is configured for mapping the determined behavioral score and the performance score with a predetermined threshold value. The predetermined threshold value may be a defined limit or range used as a benchmark to compare behavioral or performance scores. Deviations beyond this threshold indicate potential anomalies. The predetermined threshold value may either be user defined, or system defined. The anomalies determination module 308 is configured for determining a deviation in the determined behavioral score and the performance score based on the mapping. Furthermore, the anomalies determination module 308 is configured for determining the one or more anomalies associated with the plurality of assets 110A-N and the artifacts of the technical installation 114 based on the determined deviation.

In an example embodiment, consider a scenario where a technical installation 114 with multiple sensors and actuators (temperature sensors, fans, pressure valves) are present. In such a case, the graphical representation comprises nodes representing sensors, actuators, and artifacts. Further, the graphical representation comprises connection paths representing relationships (e.g., "Sensor triggers Actuator"). The anomalies determination module 308 identifies patterns like "Temperature sensor > 40°C → Fan ON in 5s." "Pressure sensor > 80psi → Valve Release." The temperature sensor shows erratic readings, causing the Behavioral Score to be calculated at 65%. Fan activation delayed causes the Performance Score to be calculated at 75%. In case the predetermined thresholds comprise behavioral threshold at 85%, and performance threshold at 80%, then it is determined that both the scores fall below their respective thresholds. This leads to detecting the anomalies as "Erratic Temperature Sensor Readings" (behavioral issue), and "Delayed Fan Activation" (performance issue). The anomalies determination module 308 may then notify maintenance to recalibrate the sensor and inspect the fan for potential mechanical issues.

In an example embodiment, the behavioral score and the performance score are calculated using artificial intelligence (AI) models, such as, for example, by applying machine learning algorithms, typically based on historical data, patterns, and real-time inputs. In an example embodiment, the AI models may comprise statistical models, clustering, or neural networks to compute the behavioral score. Further, in order to calculate the performance score, input parameters such as efficiency, an output quality, a response time, and an uptime from historical and live operational data. AI models such as regression models or performance prediction models evaluate these metrics against predefined benchmarks or optimal levels. A normalized performance score indicating how effectively the asset 110 meets its performance standards is determined. Both scores are refined using AI techniques such as feature engineering, temporal analysis, and contextual correlation to ensure accuracy and reliability.

In an example embodiment, the computing system 102 integrates Knowledge Graphs (KGs) and Large Language Models (LLMs) to represent multimodal industrial data and enhance anomaly detection. The knowledge graph representation integrates embeddings from all modalities into joint embeddings at the node level. Each node in the graph represents an asset 110, by combining visual context from images, temporal and spatial patterns from time series data, acoustic features from audio data, operational thresholds from the tabular data, and semantic insights from textual data. This consolidated graphical representation allows for anomaly detection across modalities by analyzing deviations in the embeddings and their interrelations.

For example, using techniques such as, Graph Neural Networks (GNNs) and Hierarchical Graph Attention Networks, the anomalies determination module 308 performs advanced reasoning to detect and contextualize anomalies. For example, similar behavior patterns (e.g., audio spikes and time series deviations) are identified through proximity in embedding space. Furthermore, relationships between nodes (e.g., pump failure affecting downstream valves) enable tracing anomaly propagation across the graph. Also, temporal metadata allows identifying anomalies at their onset and tracking their evolution.

The action determination module 310 is then configured to determine one or more corrective actions for rectifying the determined one or more anomalies based on an Artificial Intelligence (AI)-based action model. The Artificial Intelligence (AI)-based action model comprises for example, but not limited to, explainer (for example, SHapley Additive explanations (SHAP), Local Interpretable Model-agnostic Explanations (LIME)) models to provide explanations of anomalies, identify SOPs, perform a procedure explained in SOP, test/validate changes and the like. The one or more corrective actions comprises for example, but not limited to, operational, technical, and procedural domains. These corrective actions are determined to address specific anomalies comprehensively, ensuring efficient restoration of normal operations, minimizing downtime, and reducing the likelihood of recurrence. Examples of such corrective actions are described above.

The LLM module 312 comprises a set of LLMs which are trained on multimodal data representations to comprehend relationships between diverse data types. For example, the LLMs analyze textual data such as service reports and SOPs to identify historical patterns of anomalies, root causes, and corresponding remedies. By linking textual descriptions with other data types (e.g., audio or images), the LLMs provide a richer context to detect deviations from normal operations. For

Example, a pump's unexpected shutdown may be cross-referenced with service records, SOPs, and sensor data to infer potential causes such as, overpressure or maintenance lapses.

In another example embodiment, time-series data from sensors may be fed into the computing system 102 to identify abnormal patterns using AI models integrated with the LLMs. The LLMs process metadata and verbalize the time-series data (e.g., "Temperature rose beyond operational limits at 3:00 PM"). These models detect deviations from learned normal patterns using statistical and AI-based techniques such as for example, trend analysis, Fourier transforms, or recurrent networks. For example, if a vibration sensor shows unusual spikes, the LLMs correlate this with nearby asset's time-series data, historical incident records, and visual inspections for potential causes such as, for example, imbalance or misalignment.

In yet another example embodiment, visual anomalies, such as discoloration, cracks, or irregular flame patterns, are identified using computer vision models augmented by the LLMs. Image embeddings linked to textual metadata and P&ID diagrams allow the LLMs to generate detailed anomaly descriptions. For example, a detected crack in a pipeline image is analyzed alongside P&ID data to assess its impact on downstream components.

In still another example embodiment, the audio data, represented as features like MFCC embeddings, may be analyzed for deviations in sound patterns. The LLMs correlate anomalous audio signals (e.g., high-pitched whines from a motor) with textual data like service manuals and past incidents. For example, a screeching sound in a motor is flagged, and the LLM references service reports to suggest bearing wear as a likely cause.

In yet another example embodiment, the tabular data, such as COP curves or efficiency charts, may be treated as metadata for anomaly detection. The LLMs use these data references to establish thresholds and compare operational metrics with expected norms. For example, if a chiller's performance drops below the expected COP range, the LLMs identify contributing factors by analyzing associated time-series and textual data.

In an embodiment, the LLMs query the KG to infer cascading effects of anomalies. For example, if an upstream pump fails, the LLM evaluates impacts on downstream valves and alerts operators of potential flow disruptions. By continuously learning from historical data and operational patterns, LLMs provide predictive insights and early warning signals. Deviations detected at an early stage are flagged, and potential root causes are suggested, enabling proactive intervention. For example, a steady increase in motor temperature over several hours is flagged, and the LLM recommends lubrication or inspection based on past trends.

The LLM module 312 is configured for obtaining a user prompt for identifying a state and performance of the plurality of assets based on the generated graphical representation. The user prompt comprises one or more questions associated with the state and the performance of the plurality of assets. Further, the LLM module 312 is configured for generating a response to the user prompt by applying the generated user prompt to the one or more Large Language Models. The response comprises the determined one or more anomalies and the determined one or more corrective actions.

in an example embodiment, the term 'state' of an asset 110 refers to its current condition, configuration, or operational status, the state captures static or transitional attributes of the asset, for example, the state comprises operational state of the asset 110, such as for example, an asset (e.g., a pump) is in one of the following states: running, stopped, idle, or under maintenance. further, the state comprises health state, for example, a machine is classified as normal, warning, or critical based on diagnostic data from sensors. Furthermore, the state comprises physical state, for example, a valve position is either open, closed, or partially open. furthermore, the state comprises energy state, for example, a current energy consumption of a chiller is categorized as low, medium, or high. moreover, the state comprises connectivity state, for example, a communication gateway is marked as online, offline, or intermittent.

In an example embodiment, the term `performance' of the asset 110 refers to its ability to meet operational or functional metrics over a defined period. The performance measures effectiveness, efficiency, and deviations from optimal behavior.

In an example embodiment, the LLM responses may comprise "A boiler's thermal efficiency is measured at 85%, indicating a slight reduction from the optimal 90%", "A conveyor belt is producing at 95% of its maximum capacity due to motor speed constraints", "A compressor shows increased vibration levels indicating potential bearing wear, impacting performance", "A robotic arm has a defect rate of 2% in the assembly process, higher than the acceptable 0.5% threshold". The performance of the asset 110 is measured by the time taken to process and act upon sensor inputs, with a current latency of 10ms, whereas the standard is 5ms. The user prompt may include queries such as for example, "What is the current operational state of all pumps on the factory floor?", "Which assets are performing below their efficiency threshold?", "Highlight assets in a critical state impacting overall performance.", "Display the trends in performance over the past 7 days for all cooling systems."

In generating the response to the user prompt by applying the generated user prompt to the one or more large language models, the LLM module 312 is configured for identifying an intent within the user prompt by extracting one or more keywords existing in the one or more questions. The intent refers to the purpose or objective of the user prompt, which is identified by analyzing the keywords or phrases in the prompt. The intent defines what the user wants to achieve or inquire about. For example, if the prompt is: "Which assets are underperforming and need maintenance?", the intent may be to identify underperforming assets 110A-N requiring maintenance. Further, the LLM module 312 is configured for determining one or more sub-graphs within the generated graphical representation based on the identified intent. The one or more sub-graphs are specific, smaller portions of the overall graphical representation (e.g., a Knowledge Graph) that are relevant to the identified intent. These sub-graphs focus on nodes (assets 110A-N) and edges (relationships) that are directly associated with the user query. For example, if the intent is to find underperforming assets 110A-N, the sub-graph may include nodes representing assets 110A-N with low performance metrics. Edges representing dependencies or connections between those assets 110A-N.

Furthermore, the LLM module 312 is configured for determining one or more relationships between the plurality of assets 110A-N within the determined one or more sub-graphs based on the identified intent and the one or more keywords. Additionally, the LLM module 312 is configured for generating a context for the response by correlating the determined one or more relationships between the plurality of assets 110A-N. The 'context' may refer to a deeper understanding derived by correlating relationships, data, and insights within the sub-graphs. The context ensures the response aligns with the user's intent by integrating information relevant to the query. For underperforming assets 110A-N, the context may correspond to analysis of performance metrics, maintenance logs, and connections between assets 110A-N (e.g., upstream equipment affecting performance downstream). Moreover, the LLM module 312 is configured for applying the generated context as an input to the one or more large language models. Further, the LLM module 312 is configured for generating the response to the user prompt based on results of the one or more large language models. The results of LLM may refer to the final outputs or insights generated by applying the user prompt and the constructed context to the large language models (LLMs). These results provide a natural language explanation or response based on the analyzed data. For example, for the query about underperforming assets 110A-N, the results of LLM may comprise "The following assets are underperforming Pump A, Motor B. Pump A shows reduced efficiency due to increased vibration levels, while Motor B has been flagged for overdue maintenance. These issues are likely affecting downstream systems."

In yet another preferred embodiment, the LLM module 312 is configured for predicting an occurrence of an event within the technical installation 114 based on the determined behavioral score and the performance score. The event comprises the one or more anomalies. The LLM module 312 is further configured for applying the predicted occurrence of the event as an input to a trained Large Language Model (LLM). Furthermore, the LLM module 312 is configured for generating a LLM response comprising a root cause for the predicted occurrence of the event. The root cause may include for example, but not limited to, equipment overload, sensor malfunction, network latency, component wear and tear and the like.

In an example embodiment, Large Language Models (LLMs) calculate root causes by using their pre-trained knowledge, fine-tuned domain expertise, and the structured data they receive. The process begins with input preparation, where data such as sensor readings, operational parameters, behavioral and performance scores, and historical metadata are collected. For instance, a centrifugal pump experiencing pressure fluctuations, elevated temperature, and increased vibration may provide these characteristics as input. The LLM parses this input, identifying key variables and relationships, such as linking pressure fluctuations and vibration to potential mechanical issues.

Once the input is structured, the LLM module 312 applies its contextual understanding and domain-specific knowledge. Fine-tuned models match patterns from the input against pre-learned fault scenarios stored within the LLM. For example, the combination of pressure fluctuations and high vibration might correlate strongly with cavitation in pumps. Additionally, the model uses probabilistic ranking mechanisms to assign weights to potential root causes, considering the likelihood of each based on input features and historical patterns.

The LLM module 312 conducts a step-by-step root cause identification process. The LLM module 312 first matches patterns and anomalies with known fault scenarios and then applies causal analysis based on pre-trained relationships between variables. For example, cavitation is often caused by low inlet pressure, which the LLM module 312 may infer from the symptoms. The LLM module 312 also incorporates temporal reasoning by analyzing trends in input data. For instance, a gradual increase in vibration over time might suggest bearing wear, whereas sudden spikes may indicate a different issue like impeller damage. Embedding-based reasoning allows the LLM module 312 to compare the current scenario with similar cases in its knowledge base, further narrowing down root causes.

Based on this analysis, the LLM module 312 generates a comprehensive response. The LLM module 312 identifies the most probable root cause, such as cavitation due to low inlet pressure, and provides supporting evidence, like the observed correlation between symptoms and historical fault patterns. The response also includes actionable recommendations, such as inspecting the impeller for damage or checking inlet valve positions.

The adaptability of LLMs enables them to analyze input data from various domains, making them versatile tools for root cause analysis. Their ability to generalize from vast datasets allows them to infer root causes even when the input information is incomplete. Moreover, LLMs enhance trust by providing clear explanations and logic for their diagnoses. However, challenges such as input ambiguity or lack of domain-specific knowledge in base models can arise. These challenges can be mitigated by fine-tuning LLMs on specialized datasets and ensuring the input is detailed and context rich. Through this structured approach, LLMs effectively predict and diagnose complex technical anomalies.

The output module 314 is configured for outputting the graphical representation, the determined one or more anomalies and the determined one or more corrective actions on a user interface of a user device 108A-N. The graphical representation may either be displayed or be exported as an API or any code format.

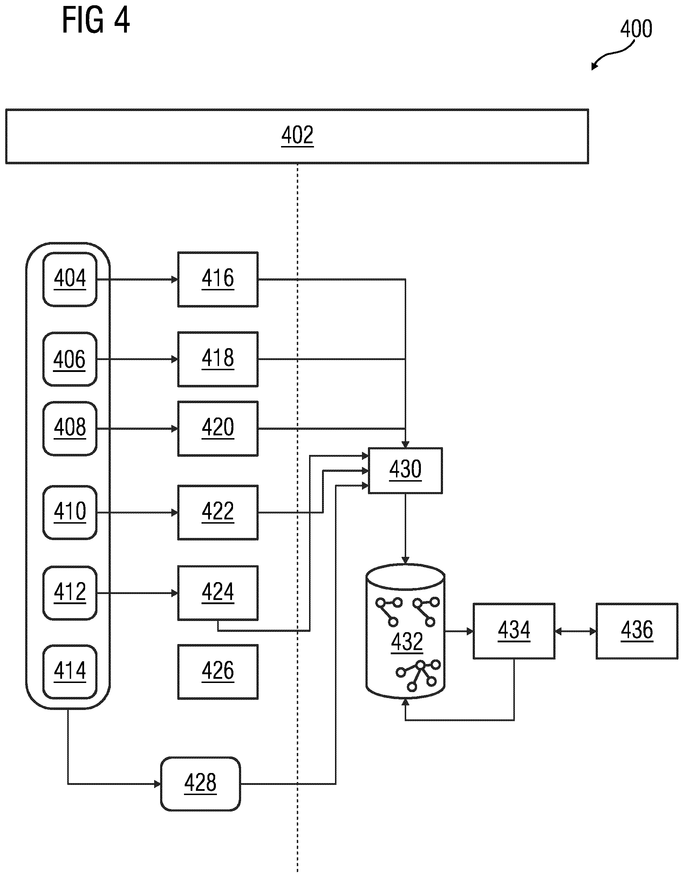

FIG. 4 is a block diagram illustrating a process 400 of generating a graphical representation using various modalities of industrial data, according to an embodiment of the present invention. Specifically, FIG. 4 depicts an example process 402 for creating an enriched graph by transforming various data types or modalities 404, 406, 408, 410, 412, and 414 into corresponding embeddings 416, 418, 420, 422, 424, 426 using the data unification service module 430. These embeddings 416, 418, 420, 422, 424, 426 are then stored in a graph database 432, allowing for multi-modal analysis and pattern recognition. The several data types that are considered for inclusion in the graph may comprise visual or image data 404, for example, such as, product visuals, heatmaps and the like. These data are likely represented as visual data associated with a product, such as images or thermal maps.

Further, the data types also comprise structured data 406 such as charts or tabular information comprising tables, graphs, or charts or the like. Furthermore, the data types 404, 406, 408, 410, 412, and 414 also comprise audio data 408 such as operation sounds, vibrations, such as sounds emitted during operation or vibrations captured by sensors. Furthermore, the data types also comprise text data 410 such as product manuals or service reports. The other types of data may comprise sensor data (operational) 412. This refers to time-series data collected from sensors monitoring the operation of the asset 110 or system. Furthermore, the other types of data may comprise P&ID Diagrams 414. These are schematics representing the piping and instrumentation of the technical installation 114.

Each data types are transformed into respective target formats 416, 418, 420, 422, 424, 426 based on the type of data. For example, the image data 404 is transformed into multi-modal embeddings 416. Similarly, the tabular data 406 is transformed into Verbalization 418 using LLMs with a fixed response template. Specifically, this transformation suggests that the structured data is converted into textual descriptions using Large Language Models (LLMs). Furthermore, the audio data 408 is transformed into "MFCC features extracted" 420 which indicates that Mel-Frequency Cepstral Coefficients are extracted from the audio data to represent it numerically. Additionally, the textual data 410 is transformed into embeddings 422 using "NLP engine" which processes the textual data and generates the embeddings that capture the semantic meaning of the text. Furthermore, the sensor data 412 is transformed into "Time series verbalization to provide insights" 424 which suggests that the time-series data is analyzed to identify patterns and trends, which are then summarized in a textual format. Moreover, the P&ID Diagrams 414 are transformed into specific format 426 called DEXPI (Domain-Specific Exchange for Process Information) for further analysis.

Once each of the data formats are transformed into the target data formats to generate the transformed data, the transformed data is integrated into a Graph Database (Graph DB) 432.

The data unification service 430 handles the integration of the various data types into the graph or target data format. Further, the Service block 434 is configured to create node embeddings in a hierarchical way. The service block 434 organizes the embeddings hierarchically within the graph, reflecting the relationships between different data elements.

The multi-modal LLM module 436 is used to analyze the integrated data within the graph, potentially identifying patterns and relationships that are not apparent from individual data types.

The graph database 432 is configured to store node embeddings as an additional property of the node. This implies that the generated embeddings are stored as an additional property associated with each node in the graph.

Furthermore, the metadata extraction service module 428 is configured for extracting relevant metadata or metadata references from the various data sources or input datasets, which may be used to enrich the graph and improve analysis.

FIG. 5 is a schematic representation of an exemplary holistic graph 500 comprising different modalities in different formats along with metadata context, according to the embodiment of the present invention. Specifically, FIG. 5 represent an industrial asset graph 500 in a holistic manner. The graph 500 incorporates various data modalities, each contributing to a comprehensive understanding of the asset's behavior and condition. The asset X 504 may be a central node representing the industrial asset 110 being monitored. The P & ID 502 may be another node connected to the asset X 504 using a connection path. The P & ID 502 provides a visual representation of the asset's components and their interconnections. The asset X 504 is further connected to audio features node 506. The audio features node 506 may comprise features extracted from the audio data, such as Mel-Frequency Cepstral Coefficients (MFCCs), which may be used for analysis and comparison. The audio features node 506 produces audio data deviations indicating any deviations or anomalies detected in the audio data associated with the asset X 504.

Further, the asset X 504 is connected to time series data node 508 which comprise raw time-series data collected from sensors monitoring the asset X 504. The time-series data node 508 produces time series deviations indicating deviations or anomalies observed in time-series data related to the asset X 504, such as sensor readings. Furthermore, the asset X 504 is connected to work order data node 510 which comprise historical maintenance records or work orders associated with the asset X 504. Furthermore, the asset X 504 is connected to image data node 516 which incorporates visual data, such as images or videos, related to the asset's condition or maintenance activities.

The graph 500 further comprises event 1 node 514 representing a specific event or incident related to the asset X 504, such as, for example, but not limited to a maintenance activity or a detected anomaly. The relationships between each of the nodes in the graph 500 indicate context and relevance of the node. For example, the P&ID node 502 is connected to the Asset X node 504, indicating that the P&ID provides context for the asset. Further, the Asset X 504 is connected to Audio Data 506, Time Series data, 508, and Event 1 514 nodes, suggesting that these factors are related to the asset's behavior. Further, the Event 1 node 514 is connected to various data sources, indicating that the event may have been triggered by specific data patterns or anomalies. Further, the Event 1 node 514 is connected to a time stamp data 512. The Work Order Data node 510 and the Image Data node 516 are also connected to the Event 1 node 514, suggesting that these data types may be relevant to understanding the event.

FIG. 6 is a schematic representation of an exemplary anomaly graph with metadata connected to service ticket graph, according to an embodiment of the present invention. Specifically, FIG. 6 depicts a representation of the anomaly graph 600 with its metadata connected to service ticket graph. FIG. 6 depicts two interconnected knowledge graphs 602A and 602B. One graph 602A focuses on anomalies and their associated metadata, while the other graph 602B represents service tickets and their related information (Problem, Remedy, and Cause).

Specifically, the anomaly 21 node represents a specific anomaly. Further, anomaly 10 node represents another anomaly. The date of occurrence node represents the date when the anomaly occurred. The input pressure node is flagged as a top contributor representing the factor identified as the primary cause of the anomaly. Further, the motor frequency node is flagged as second top contributor representing the secondary contributing factor to the anomaly.

The graph 600 further comprises edges that connect anomalies to their respective dates of occurrence and contributing factors.

In the second graph 602B, which is the Service Ticket Graph (PRC Graph), the ticket 4 node represents a specific service ticket, ticket 34 node represents another service ticket, reading 5 Bar node represents a sensor reading value, the input pressure node represents the input pressure. The input pressure node is assigned as the cause indicating that this node may be the identified cause of the problem. Ticket 4 node from the service ticket graph is connected to "Anomaly 10" in the anomaly graph. This suggests that service ticket 4 was likely created in response to anomaly 10. Further, fix the coating of the wall node is assigned as remedy suggesting that this may be the solution or corrective action taken to address the problem. The low production flow node is marked as the problem representing the issue described in the service ticket. The date of occurrence node represents the date when the problem occurred. Edges connect service tickets to their associated readings, causes, remedies, and problems. An edge also connects "Input Pressure" to "Reading 5 Bar," indicating a relationship between these two elements. By linking these graphs, it becomes possible to analyze relationships between anomalies and service tickets, potentially identifying patterns and insights that would not be apparent from examining each graph in isolation. The use of metadata, such as dates of occurrence and contributing factors, enriches the analysis, and provides valuable context for understanding the relationships between different entities. The text within the boxes ("Generate KG <Anomalies + Contributors>" and "Generate KG <PRC graph>") suggests that these graphs were generated automatically using a knowledge graph generation process. The use of dashed lines in the figure may indicate potential relationships or associations that require further investigation.

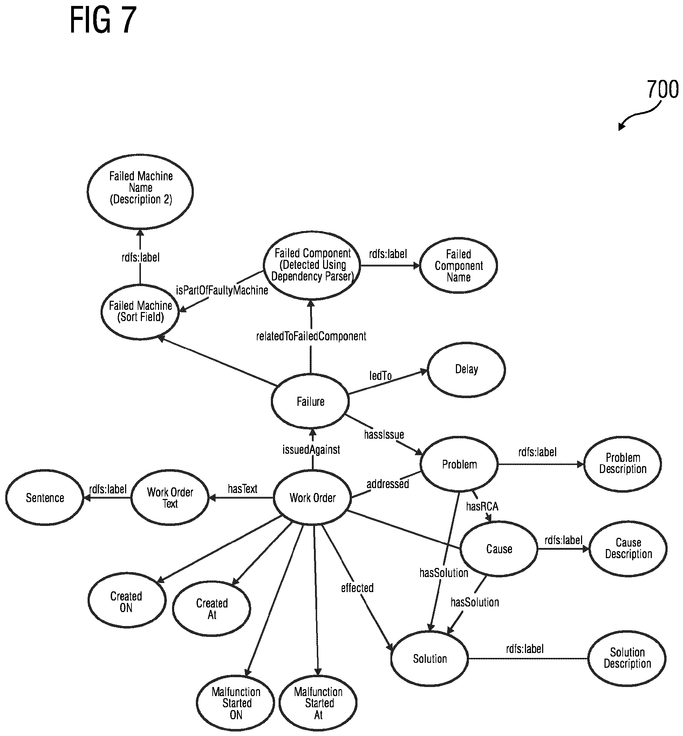

FIG. 7 is a schematic representation of an exemplary graphical representation of a work order ticket 700 with the various extracted entities, according to an embodiment of the present invention. Specifically, FIG. 7 illustrates a knowledge graph representation 700 of a work order ticket. The graph 700 visualizes the relationships between different entities extracted from the work order text, such as failed components, causes, and solutions. The central node is the "Work Order," which is linked to its corresponding "Work Order Text." Individual "Sentences" extracted from the text are also connected to the Work Order. The graph 700 captures information about the failed machine or asset 110, including its "Name" and a descriptive field "Description 2." The "Failed Machine" is further linked to the "Failed Component" within it, with the relationship "isPartOfFaultyMachine." The "Failure" node connects the "Failed Machine" and "Failed Component" to the "Work Order." The "Problem" associated with the failure is linked to the "Work Order" through the "hasIssue" relationship. The "Cause" of the problem is identified and connected to the "Work Order" using the "identified" relationship. The "Solution" to the problem is also linked to the "Work Order" through the "hasSolution" relationship. The graph 700 also includes nodes for "Delay" and "Created On" and "Created At" to capture additional temporal information related to the work order. The "rdfslabel" property is used to assign labels or names to different nodes and properties within the graph 700. This visualization facilitates analysis, knowledge discovery, and decision-making related to maintenance and repair activities by representing the relationships between various entities extracted from the work order ticket.

Further, the graph 700 also includes nodes for "Malfunction Started On" and "Malfunction Started At." These nodes capture the date and time when the malfunction or failure began. This information is valuable for understanding the duration of the issue, identifying potential trends in failure occurrences, and assessing the impact of the malfunction on operations. The "Failed Machine" node includes a "Sort Field" property, potentially used for categorization. The "Failed Component" node indicates that its identification might involve natural language processing techniques, such as dependency parsing, to analyze the work order text and determine the specific component that failed.

FIG. 8 is a schematic representation of an exemplary enriched knowledge graph 800 depicting a single asset 110, according to an embodiment of the present invention. Specifically, FIG. 8 depicts a single "Asset 110" (a chiller in this case) within an enriched knowledge graph 800. Various data modalities associated with the asset 110 are connected to this central node. These modalities comprises vectorized product manuals, vectorized images, verbalized time series data, vectorized heat maps, and Fourier-transformed vibration data. Each data type is converted into a vector representation, capturing its essential features.

In an example embodiment, the vectorized product manual node represents the product manuals associated with the chiller, converted into a vector format (likely using natural language processing techniques). This vector format allows for efficient comparison and analysis of the text.

The vectorized image node represents images related to the chiller, such as maintenance photos or schematics, converted into a vector format (likely using image processing techniques). This vector representation captures the visual information of the images for analysis and comparison.

The verbalized time series data node represents time-series data (like sensor readings) associated with the chiller, converted into a textual description (likely using natural language processing techniques). This allows for easier analysis and comparison of time-series data.

The vectorized heat map node represents heat maps related to the chiller, converted into a vector format. This vector representation allows for efficient analysis and comparison of heat map data.

The fourier transformed vibration data node represents vibration data collected from the chiller, transformed using Fourier analysis, and converted into a vector format. This transformation allows for the identification of frequency components in the vibration data, which can be helpful for diagnosing issues.

The node embedding node is the core concept. This is a unique vector representation of the entire chiller, capturing information from all the connected modalities. This embedding combines the information from the product manuals, images, time-series data, heat maps, and vibration data into a single, unified representation.

The core concept is to create a "node embedding" for the asset, which is a unique vector representation that combines the embeddings of all associated modalities. This hierarchical approach allows for the integration of diverse data types into a unified representation. A multimodal LLM is employed to process and understand these multiple data types and generate the embeddings.

The created embeddings are used to build a vector index for efficient search and retrieval of assets. When a query is made, the system 102 first finds the closest node in the graph based on the query's embedding and then explores neighbouring nodes to retrieve relevant information.

The ultimate objective is to represent all assets 110A-N within the factory or technical installation 114 as points in a common n-dimensional embedding space. Each modality contributes to a subset of these dimensions, enabling easy search, similarity checks, and retrieval of assets 110A-N based on their combined characteristics. Furthermore, the embedding space incorporates information about events associated with the assets 110A-N(e.g., anomalies, startups, shutdowns), which influence the asset's embedding and provide a dynamic representation of its state and behaviour.

By leveraging embeddings and a multimodal LLM, this approach enables the integration of diverse data sources into a unified representation, facilitating efficient analysis, search, and decision-making within the industrial context.

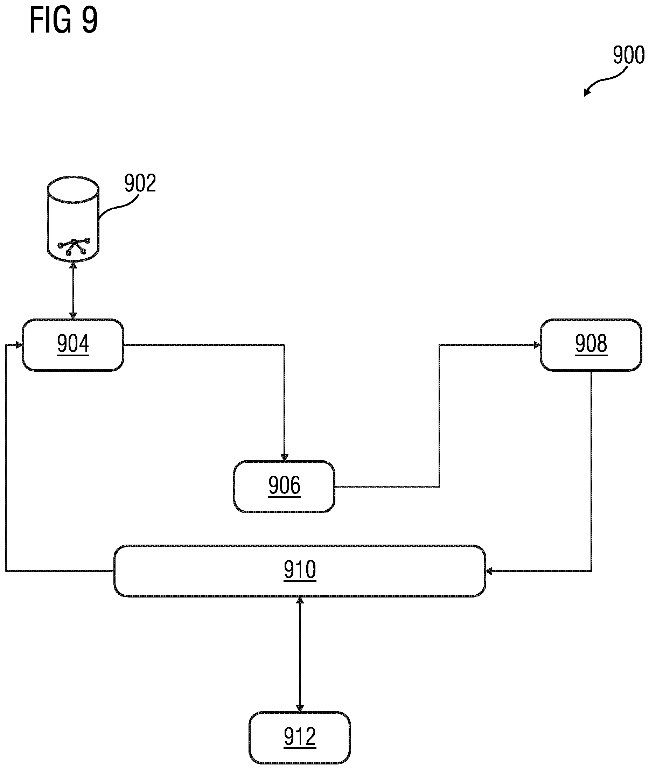

FIG. 9 is a block diagram representation illustrating an exemplary process 900 of generating a response to a user query using one or more Large Language models, according to an embodiment of the present invention. Once an enriched Knowledge Graph (KG) is built, a Retrieval Augmented Generation (RAG) pipeline 900 is enabled. This pipeline 900 queries the KG to extract relevant information and provides this context to the LLM for complex reasoning. At step 902, an enriched graph from a database is used as an input for generating a response. The enriched graph comprises information related to various entities, relationships, and facts. At step 904, a service operation to perform sub-graph isomorphism and identify closest sub-graphs is carried out. This service operation takes a user query as input and searches the enriched graph for relevant sub-graphs. The sub-graph isomorphism may be a technique used to find patterns or substructures within the graph that match the query's intent. At step 906, a service operation to process the returned responses and convert into context is carried out. This service operation processes the sub-graphs retrieved from the previous step. This extracts relevant information from these sub-graphs and converts it into a coherent and concise context that may be used by the LLM. At step 908, the LLM receives the context generated by the previous service. The LLM uses this context along with the original user query to generate a comprehensive and informative response. At step 910, a service operation to receive query and parse the query to identify the intent is carried out. Further, the service operation receives a final response and sends back the response to the user. This service operation acts as an intermediary between the user and the computing system 102. The service operation receives the user query, parses them to understand the user's intent, and forwards the query to the sub-graph isomorphism service. After the LLM generates a response, this service receives the response and sends it back to the user.

At step 912, the generated response is outputted on an operator interface. The operator interface may be a user interface through which the user interacts with the computing system 102. The users may input their queries here, and the computing system 102 may display the generated responses.

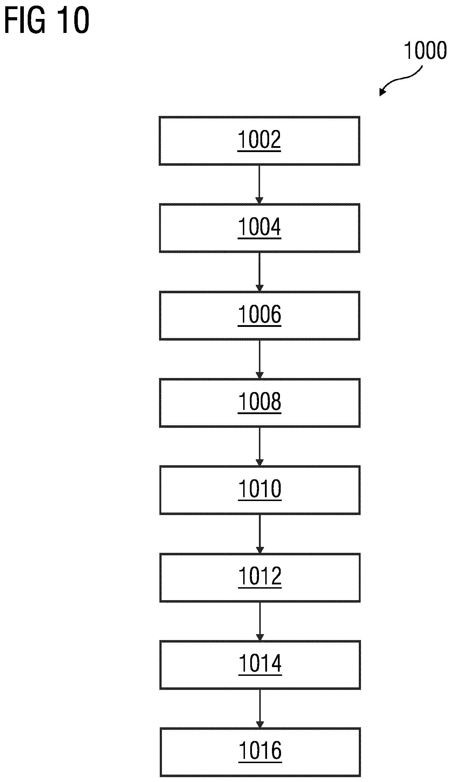

FIG. 10 is a process flowchart illustrating an exemplary method 1000 for managing asset performance of one or more assets 110A-N in technical installation 114, according to an embodiment of the present invention. At step 1002, input datasets associated with the assets 110A-N in the technical installation 114 are obtained from a plurality of data sources 106A-N. The input datasets comprises a multi-modal data associated with the assets 110A-N in the technical installation 114. The multi-modal data corresponds to one or more data formats. The multi-modal data comprises a plurality of data dimensions. The input datasets comprise a multimedia data, a tabular data, a text data, an audio data, a time series data, an engineering diagram layout design data, and the like. The plurality of data sources 106A-N comprises external data sources, and internal data sources.

Further, at step 1004, the method 1000 comprises identifying a type of data format associated with each of the input datasets by pre-processing the obtained input datasets using one or more pre-processing models. The one or more pre-processing models comprises for example, but not limited to, Natural Language Processing (NLP) models, foundation models, multi-model embeddings, Convolutional Neural Networks (CNNs), Graph Neural Networks (GNNs), dimensionality reduction models, Generative Artificial Intelligence models, Hierarchical Graph Attention Networks, and the like. The type of the data format comprises for example, but not limited to, structured data formats, unstructured data formats, time-series data formats, image and visual data formats, acoustic and vibration data formats, control system data formats, and geospatial data formats.

Further, at step 1006, the method 1000 comprises determining a data transformation model applicable to the identified type of data format using an Artificial Intelligence (AI)-based model. The data transformation model comprises one of artificial intelligence models and foundational models. The Artificial Intelligence (AI)-based model comprises a semantic model. The semantic model comprise for example, but not limited to, Data Exchange in the Process Industry (DEXPI), or embeddings model and the like. The data transformation model understands and refines the input datasets for the identified type of data format using AI based model.

Further, at step 1008, the method 1000 comprises transforming each of the obtained input datasets into a target data format based on the determined data transformation model. The target data format may conform to any of the structured data formats, unstructured data formats, time-series data formats, image and visual data formats, acoustic and vibration data formats, control system data formats, and geospatial data formats.

Furthermore, at step 1010, the method 1000 comprises generating a graphical representation corresponding to the technical installation 114 based on the transformed input datasets. The graphical representation comprises a plurality of nodes representing a plurality of assets 110A-N and artifacts within the technical installation 114. Each of the plurality of nodes are connected using one or more connection paths. The graphical representation may correspond to a knowledge graph representation. This representation enables plant operators and AI workflows to identify complex relationships and make informed decisions with a broader and more detailed context. This linking process allows for a holistic view of the asset 110 and its sensors, facilitating better analysis and decision-making.

Furthermore, at step 1012, the method 1000 comprises determining one or more anomalies associated with the plurality of assets 110A-N and the artifacts of the technical installation 114 based on the generated graphical representation using one or more Large Language Models (LLMs). The one or more anomalies comprises operational anomalies, process anomalies, sensor anomalies, data anomalies, environmental anomalies, and visual anomalies. The one or more one or more Large Language Models (LLMs) comprises GPT-based models (e.g., OpenAI's GPT series), Bidirectional Encoder Representations from Transformers (BERT), and Text-to-Text Transfer Transformer (T5).

Furthermore, at step 1014, the method 1000 comprises determining one or more corrective actions for rectifying the determined one or more anomalies based on an Artificial Intelligence (AI)-based action model. The one or more corrective actions comprises for example, but not limited to, operational, technical, and procedural domains. These corrective actions are determined to address specific anomalies comprehensively, ensuring efficient restoration of normal operations, minimizing downtime, and reducing the likelihood of recurrence.

Additionally, at step 1016, the method 1000 comprises outputting the graphical representation, the determined one or more anomalies and the determined one or more corrective actions on a user interface of a user device 108.

Further, the method 1000 comprises obtaining a user prompt for identifying a state and performance of the plurality of assets 110A-N based on the generated graphical representation. The user prompt comprises one or more questions associated with the state and the performance of the plurality of assets 110A-N. Further, the method 1000 comprises generating a response to the user prompt by applying the generated user prompt to the one or more Large Language Models. The response comprises the determined one or more anomalies and the determined one or more corrective actions.

In a preferred embodiment, in generating the response to the user prompt by applying the generated user prompt to the one or more large language models, the method 1000 comprises identifying an intent within the user prompt by extracting one or more keywords existing in the one or more questions. Further, the method 1000 comprises determining one or more sub-graphs within the generated graphical representation based on the identified intent. Furthermore, the method 1000 comprises determining one or more relationships between the plurality of assets 110A-N within the determined one or more sub-graphs based on the identified intent and the one or more keywords. Additionally, the method 1000 comprises generating a context for the response by correlating the determined one or more relationships between the plurality of assets 110A-N. Moreover, the method 1000 comprises applying the generated context as an input to the one or more large language models. Further, the method 1000 comprises generating the response to the user prompt based on results of the one or more large language models.

In another preferred embodiment, in transforming each of the obtained input datasets into the target data format based on the determined data transformation model, the method 1000 comprises classifying the obtained input datasets into a plurality of data categories based on the type of data format. The plurality of data categories comprises structured data category, unstructured data category, time-series data category, image and visual data category, acoustic and vibration data category, control system data category, and geospatial data category. Further, the method 1000 comprises extracting first set of features associated with the obtained input datasets based on the classification. The extracted first set of features comprises spectral features and temporal features. Further, the method 1000 comprises generating one or more embeddings for the extracted first set of features using determined data transformation model. The determined data transformation model comprises one of artificial intelligence models and foundational model. The one or more embeddings comprises multi-modal embeddings, text embeddings, spectral embeddings, and temporal embeddings. Further, the method 1000 comprises transforming each of the obtained input datasets into the target data format based on the generated one or more embeddings.

In another preferred embodiment, in generating the graphical representation corresponding to the technical installation 114 based on the transformed input datasets, the method 1000 comprises determining a type of modality associated with the obtained input datasets. Further, the method 1000 comprises extracting a second set of features from each of the obtained input datasets based on the determined type of modality. The second set of features comprises asset-specific features and contextual features. The method 1000 further comprises extracting metadata references from each of the obtained input datasets based on the determined type of modality. Furthermore, the method 1000 comprises identifying common features across the plurality of modalities by comparing the extracted second set of features from one modality with corresponding set of features of remaining modalities. Furthermore, the method 1000 comprises establishing the one or more relationships between the obtained input datasets corresponding to plurality of modalities using the identified common features across the plurality of modalities. Additionally, the method 1000 comprises associating each of the identified common features with the plurality of nodes based on the extracted metadata references and the established one or more relationships.

In yet another preferred embodiment, the method 1000 further comprises determining a hierarchical level, a data object category and a node position level corresponding to the type of modality based on the identified common features, extracted metadata references and the established one or more relationships. Furthermore, the method 1000 comprises associating each of the identified common features of specific modality with the plurality of nodes based on the determined hierarchical level, the data object category, and the node position level. Furthermore, the method 1000 comprises generating a linked representation between each of the plurality of modalities based on the association. The linked representation comprises a knowledge graph representation.

In an aspect of the preferred embodiment, in generating the graphical representation corresponding to the technical installation 114 based on the transformed input datasets, the method 1000 comprises identifying a number of assets 110A-N and the artifacts corresponding to the assets 110 within the technical installation 114 based on the transformed input datasets. The artifacts correspond to information and parameters associated with the assets 110. The method 1000 further comprises correlating each of the identified number of the assets 110 with the artifacts based on the metadata references. The method 1000 further comprises determining a context between each of the number of the assets 110 and the artifacts corresponding to the assets 110 based on the correlation. Further, the method 1000 comprises determining the one or more relationships between each of the number of the assets 110 and the artifacts based on the determined context. Furthermore, the method 1000 comprises generating the plurality of nodes corresponding to the number of the assets 110. Additionally, the method 1000 comprises generating the one or more connection paths connecting each of the generated plurality of nodes based on the determined one or more relationships. Furthermore, the method 1000 comprises generating the graphical representation corresponding to the technical installation 114 based on the generated plurality of nodes and the generated one or more connection paths.

In another aspect of the preferred embodiment, in generating the graphical representation corresponding to the technical installation 114 based on the transformed input datasets, the method 1000 comprises determining the plurality of modalities associated with the obtained input datasets. Further, the method 1000 comprises generating the plurality of nodes based on the determined plurality of modalities. Furthermore, the method 1000 comprises determining a subset of nodes from among the generated plurality of nodes comprising semantically similar datasets. The subset of nodes is represented as vectors positioned closer in a vector space. Further, the method 1000 comprises assigning a hierarchical level for each of the plurality of nodes and the determined subset of nodes. Furthermore, the method 1000 comprise creating one or more embeddings for each of the plurality of nodes and the determined subset of nodes based on the assigned hierarchical level using the one or more Large Language Models. The one or more embeddings correspond to a numerical representation of the plurality of nodes. Further, the method 1000 comprises merging the created one or more embeddings with the metadata references of the obtained input datasets. Furthermore, the method 1000 comprises creating one or more joint embeddings for each of the plurality of nodes and the determined subset of nodes. The one or more joint embeddings represent a combined embedding of the plurality of modalities.

In a preferred embodiment, the method 1000 further comprises creating a vector index corresponding to each of the created one or more joint embeddings for querying the plurality of nodes and the determined subset of nodes. The vector index is optimized for operations such as, for example, but not limited to, nearest neighbor search, clustering, and semantic similarity queries. The vector index is associated with the joint embeddings of the nodes in the knowledge graph. Each node's joint embedding is stored in the vector index, making it possible to query the graph for nodes that are semantically or contextually similar based on their multi-modal representations. By leveraging the vector index, the computing system may quickly identify nodes or subsets of nodes that share similar characteristics, relationships, or hierarchical levels.

In an aspect of the preferred embodiment, the method 1000 comprises receiving a query related to at least one asset 110 of the technical installation 114 from a user device 108. The query may comprise a set of questionnaires relating to the one or more assets 110A-N in the technical installation 114. Further, the method 1000 comprises identifying a closest node to the received query by traversing the vector index based on the one or more joint embeddings. Further, the method 1000 comprises retrieving subsequent closest nodes to the query by hierarchically traversing neighboring nodes of the identified closest node. Furthermore, the method 1000 comprises extracting the first set of features associated with the identified closest node and the retrieved subsequent closest nodes by determining feature-level embeddings of the closest node and the retrieved subsequent closest nodes. Furthermore, the method 1000 comprises generating a response to the received query using the one or more Large Language models. The response comprises the extracted first set of features associated with the identified closest node and the retrieved subsequent closest nodes.

In yet another aspect of the preferred embodiment, in determining the one or more anomalies associated with the plurality of assets 110A-N and the artifacts of the technical installation 114, the method 1000 comprises correlating each of the plurality of nodes and the one or more connection paths within the generated graphical representation using a context. Further, the method 1000 comprises identifying one or more patterns associated with the plurality of nodes and the one or more connection paths within the generated graphical representation based on the correlation. Furthermore, the method 1000 comprises determining a behavioral score and a performance score for each of the plurality of nodes within the generated graphical representation based on the identified one or more patterns. Furthermore, the method 1000 comprises mapping the determined behavioral score and the performance score with a predetermined threshold value. The method 1000 further comprises determining a deviation in the determined behavioral score and the performance score based on the mapping. Furthermore, the method 1000 comprises determining the one or more anomalies associated with the plurality of assets 110A-N and the artifacts of the technical installation 114 based on the determined deviation.

In yet another preferred embodiment, the method 1000 comprises predicting an occurrence of an event within the technical installation 114 based on the determined behavioral score and the performance score. The event comprises the one or more anomalies. The method 1000 further comprises applying the predicted occurrence of the event as an input to a trained Large Language Model (LLM).

Furthermore, the method 1000 comprises generating a LLM response comprising a root cause for the predicted occurrence of the event. The adaptability of LLMs enables them to analyze input data from various domains, making them versatile tools for root cause analysis. Their ability to generalize from vast datasets allows them to infer root causes even when the input information is incomplete. Moreover, LLMs enhance trust by providing clear explanations and logic for their diagnoses. However, challenges such as input ambiguity or lack of domain-specific knowledge in base models can arise. These challenges can be mitigated by fine-tuning LLMs on specialized datasets and ensuring the input is detailed and context rich. Through this structured approach, LLMs effectively predict and diagnose complex technical anomalies.

The present invention provides a method and system to represent the complex modalities of an industrial system with a knowledge graph, by leveraging foundational models and graph embeddings. The present invention discloses the use of knowledge graph (KG) and foundational models to represent multiple facets of an industrial asset 110A-N. There are several different kinds of data associated with any industrial asset 110 that may be of different modalities and may be stored across various locations. Therefore, the present invention aims to provide a holistic graph representation, such as a Knowledge Graph (KG), for deriving meaningful insights from complex data related to an entity, for instance, an industrial asset 110. The KG assembles data from diverse sources 106A-N and various modalities into a unified structure. This integration allows for an enhanced understanding and interpretation of data, yielding several benefits.

The graph structure encapsulates the context of data points. Entities and their interrelationships are represented as nodes and edges, respectively, which provide a rich context for each piece of information. This context is indispensable for interpreting patterns or anomalies in the data.

Further, the KG represents and links different data modalities, such as images, audio, sensor data, and text. This feature enables cross-modal analysis, where insights are derived by considering all modalities together. For instance, an anomaly detected in sensor data may be better understood by concurrently analyzing associated image or audio data.

Furthermore, the graph structures are inherently scalable and may be dynamically updated as new data is available. This characteristic makes them well-suited for constant monitoring of assets and real-time insight derivation. Further, the graphs naturally represent hierarchical relationships, enabling analysis at different levels of granularity. In an industrial setting, a KG might comprise nodes representing individual components, subsystems, and entire machines, allowing for insights to be derived at each of these levels.

Further, techniques such as Graph Neural Networks (GNNs) and Hierarchical Graph Attention Networks may be employed on KGs for advanced analysis. These techniques effectively capture the intricate relationships in the graph and are utilized for tasks including anomaly detection, prediction, and recommendation. The KGs ensure traceability of derived insights, as the relationships between entities are explicitly represented. This transparency aids in understanding and explaining the derived insights, which is crucial in many industrial applications.

Typically, if we are relying on a single modality for detecting abnormalities or system status, the chance of a wrong prediction is higher. However, with multiple modalities the anomaly or fault may be verified by comparing with other sources.

Further, there might be several kinds of anomalies that some sources (e.g., Audio) may detect much earlier than when it starts showing up on other modalities. Unification and generalization of data representation are essential steps in creating a comprehensive and useful KG. Both unification and generalization of data representation help to create a KG that may be easily navigated and analyzed. This KG may then be used to identify anomalies, patterns, and trends that may aid in the troubleshooting and maintenance of industrial assets 110.

In process industries, assets 110 such as, for example, pumps and compressors may have numerous moving parts. Mechanical failures in these assets 110 often manifest as subtle changes in audio or vibration patterns, detectable early on. These anomalies gradually propagate through the asset system, eventually affecting auxiliary systems such as lubrication or mechanical seals. Only after these early warning signs appear in various systems, the process parameters begin to show significant deviations, which plant operators may then observe. By leveraging enriched knowledge graphs, it becomes possible to detect these early signs of failure and track the propagation of anomalies through the technical installation 114. This information may then be used to label and identify potential failure scenarios in the future.

Furthermore, enriched graphs may be utilized for process optimization. By analyzing the graph, patterns or trends that indicate sub-optimal performance may be identified. For instance, the graph may indicate that certain operator control actions taken in response to specific events consistently may lead to reduced system efficiency. By detecting these recurring patterns, the graph may be used to tag these actions as sub-optimal, enabling operators to make more informed decisions and improve overall process efficiency.

Further, in an example embodiment, the present invention discloses a method for detecting early degradation issues. Since the data sources 106A-N are efficiently linked in such a setup, root cause analysis of any issue becomes much easier.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

### LIST OF REFERENCE NUMERALS:

- 100: COMPUTING ENVIRONMENT
- 102: COMPUTING SYSTEM
- 104: NETWORK
- 106: A-N-EXTERNAL DATA SOURCES
- 108: A-N-USER DEVICES
- 110: A-N-ASSETS
- 112: A MULTIMODAL GRAPH GENERATION MODULE
- 114: TECHNICAL INSTALLATION
- 202: PROCESSOR
- 204: ACCESIBLE MEMORY
- 206: COMMUNICATION INTERFACE
- 208: A NETWORK INTERFACE
- 210: AN INPUT/OUTPUT UNIT
- 212: A BUS
- 302: DATA PREPROCESSING MODULE
- 304: A DATA UNIFIED SERVICE MODULE
- 306: A KNOWLEDGE GRAPH MODULE
- 308: AN ANOMALIES DETERMINATION MODULE
- 310: ACTION DETERMINATION MODULE
- 312: A LLM MODULE
- 314: AN OUTPUT MODULE
- 402: EXAMPLE PROCESS FOR CREATING AN ENRICHED GRAPH
- 404: IMAGE DATA
- 406: TABULAR DATA
- 408: AUDIO DATA
- 410: TEXT DATA
- 412: SENSOR DATA
- 414: P & ID DATA
- 416: MULTIMODAL EMBEDDING
- 418: VERBALIZATION USING LLM
- 420: MFCC FEATURES
- 422: NLP ENGINE
- 426: TIME SERIES VERBAILIZATION
- 428: METADATA EXTRACTION SERVICE MODULE
- 430: DATA UNIFICATION SERVICE
- 432: GRAPH DATABASE
- 434: SERVICE BLOCK
- 436: MULTI-MODAL LLM MODULE
- 502: P & ID
- 504: ASSET X
- 506: AUDIO FEATURES NODE
- 508: TIME SERIES DATA NODE
- 510: WORK ORDER NODE
- 512: TIME STANP DATA
- 514: EVENT 1 NODE
- 516: IMAGE DATA
- 602A: ANOMALIES AND THEIR ASSOCIATED METADATA GRAPH
- 602B: SERVICE TICKETS AND THEIR RELATED INFORMATION GRAPH

## Claims

1. A method for managing performance of assets (110A-N) in a technical installation (114) using generative artificial-intelligence (AI) models, the method comprising:
obtaining, by a processor (202), input datasets associated with assets (110AN) in a technical installation (114) from a plurality of data sources (106A-N), wherein the input datasets comprises a multi-modal data associated with the assets (110A-N) in the technical installation (114), wherein the multi-modal data corresponds to one or more data formats;
identifying, by the processor (202), a type of data format associated with each of the input datasets by pre-processing the obtained input datasets using one or more pre-processing models;
determining, by the processor (202), a data transformation model applicable to the identified type of data format using an Artificial Intelligence (AI)-based model;
transforming, by the processor (202), each of the obtained input datasets into a target data format based on the determined data transformation model;
generating, by the processor (202), a graphical representation corresponding to the technical installation (114) based on the transformed input datasets, wherein the graphical representation comprises a plurality of nodes representing a plurality of assets (110A-N) and artifacts within the technical installation (114) and wherein each of the plurality of nodes are connected using one or more connection paths;
determining, by the processor (202), one or more anomalies associated with the plurality of assets (110A-N) and the artifacts of the technical installation (114) based on the generated graphical representation using one or more Large Language Models (LLMs);
determining, by the processor (202), one or more corrective actions for rectifying the determined one or more anomalies based on an Artificial Intelligence (AI)-based action model; and
outputting, by the processor (202), the graphical representation, the determined one or more anomalies and the determined one or more corrective actions on a user interface of a user device (108A-N).

2. The method according to claim 1, further comprising:
obtaining, by the processor (202), a user prompt for identifying a state and performance of the plurality of assets (110A-N) based on the generated graphical representation, wherein the user prompt comprises one or more questions associated with the state and the performance of the plurality of assets (110A-N); and
generating, by the processor (202), a response to the user prompt by applying the generated user prompt to the one or more Large Language Models, wherein the response comprises the determined one or more anomalies and the determined one or more corrective actions.

3. The method according to claim 2, wherein generating the response to the user prompt by applying the generated user prompt to the one or more large language models comprises:
identifying, by the processor (202), an intent within the user prompt by extracting one or more keywords existing in the one or more questions;
determining, by the processor (202), one or more sub-graphs within the generated graphical representation based on the identified intent;
determining, by the processor (202), one or more relationships between the plurality of assets (110A-N) within the determined one or more sub-graphs based on the identified intent and the one or more keywords;
generating, by the processor (202), a context for the response by correlating the determined one or more relationships between the plurality of assets (110A-N);
applying, by the processor (202), the generated context as an input to the one or more large language models; and
generating, by the processor (202), the response to the user prompt based on results of the one or more large language models.

4. The method according to any of the preceding claims, wherein transforming each of the obtained input datasets into the target data format based on the determined data transformation model comprises:
classifying, by the processor (202), the obtained input datasets into a plurality of data categories based on the type of data format;
extracting, by the processor (202), first set of features associated with the obtained input datasets based on the classification, wherein the extracted first set of features comprises spectral features and temporal features;
generating, by the processor (202), one or more embeddings for the extracted first set of features using determined data transformation model, wherein the determined data transformation model comprises one of artificial intelligence models and foundational models and wherein the one or more embeddings comprises multi-modal embeddings, text embeddings, spectral embeddings and temporal embeddings; and
transforming, by the processor (202), each of the obtained input datasets into the target data format based on the generated one or more embeddings.

5. The method according to any of the preceding claims, wherein generating the graphical representation corresponding to the technical installation (114) based on the transformed input datasets comprises:
determining, by the processor (202), a type of modality associated with the obtained input datasets;
extracting, by the processor (202), a second set of features from each of the obtained input datasets based on the determined type of modality, wherein the second set of features comprises asset-specific features and contextual features; extracting, by the processor (202), metadata references from each of the obtained input datasets based on the determined type of modality;
identifying, by the processor (202), common features across the plurality of modalities by comparing the extracted second set of features from one modality with corresponding set of features of remaining modalities;
establishing, by the processor (202), the one or more relationships between the obtained input datasets corresponding to plurality of modalities using the identified common features across the plurality of modalities; and
associating, by the processor (202), each of the identified common features with the plurality of nodes based on the extracted metadata references and the established one or more relationships.

6. The method according to claim 5, further comprising:
determining, by the processor (202), a hierarchical level, a data object category and a node position level corresponding to the type of modality based on the identified common features, extracted metadata references and the established one or more relationships;
associating, by the processor (202), each of the identified common features of specific modality with the plurality of nodes based on the determined hierarchical level, the data object category, and the node position level; and
generating, by the processor (202), a linked representation between each of the plurality of modalities based on the association.

7. The method according to any of the preceding claims, wherein generating the graphical representation corresponding to the technical installation (114) based on the transformed input datasets comprises:
identifying, by the processor (202), a number of assets (110A-N) and the artifacts corresponding to the assets within the technical installation (114) based on the transformed input datasets, wherein the artifacts correspond to information and parameters associated with the assets (110A-N);
correlating, by the processor (202), each of the identified number of the assets (110A-N) with the artifacts based on the metadata references;
determining, by the processor (202), a context between each of the number of the assets (110A-N) and the artifacts corresponding to the assets based on the correlation;
determining, by the processor (202), the one or more relationships between each of the number of the assets (110A-N) and the artifacts based on the determined context;
generating, by the processor (202), the plurality of nodes corresponding to the number of the assets (110A-N);
generating, by the processor (202), the one or more connection paths connecting each of the generated plurality of nodes based on the determined one or more relationships; and
generating, by the processor (202), the graphical representation corresponding to the technical installation (114) based on the generated plurality of nodes and the generated one or more connection paths.

8. The method according to any of the preceding claims, wherein generating the graphical representation corresponding to the technical installation (114) based on the transformed input datasets comprises:
determining, by the processor (202), the plurality of modalities associated with the obtained input datasets;
generating, by the processor (202), the plurality of nodes based on the determined plurality of modalities;
determining, by the processor (202), a subset of nodes from among the generated plurality of nodes comprising semantically similar datasets, wherein the subset of nodes is represented as vectors positioned closer in a vector space;
assigning, by the processor (202), a hierarchical level for each of the plurality of nodes and the determined subset of nodes;
creating, by the processor (202), one or more embeddings for each of the plurality of nodes and the determined subset of nodes based on the assigned hierarchical level using the one or more Large Language Models, wherein the one or more embeddings correspond to a numerical representation of the plurality of nodes;
merging, by the processor (202), the created one or more embeddings with the metadata references of the obtained input datasets; and
creating, by the processor (202), one or more joint embeddings for each of the plurality of nodes and the determined subset of nodes, wherein the one or more joint embeddings represent a combined embedding of the plurality of modalities.

9. The method according to claim 8, further comprising:
creating, by the processor (202), a vector index corresponding to each of the created one or more joint embeddings for querying the plurality of nodes and the determined subset of nodes.

10. The method according to claim 9, further comprising:
receiving, by the processor (202), a query related to at least one asset of the technical installation (114) from a user device (108A-N);
identifying, by the processor (202), a closest node to the received query by traversing the vector index based on the one or more joint embeddings;
retrieving, by the processor (202), subsequent closest nodes to the query by hierarchically traversing neighboring nodes of the identified closest node;
extracting, by the processor (202), the first set of features associated with the identified closest node and the retrieved subsequent closest nodes by determining feature-level embeddings of the closest node and the retrieved subsequent closest nodes; and
generating, by the processor (202), a response to the received query using the one or more Large Language models, wherein the response comprises the extracted first set of features associated with the identified closest node and the retrieved subsequent closest nodes.

11. The method according to any of the preceding claims, wherein determining the one or more anomalies associated with the plurality of assets (110A-N) and the artifacts of the technical installation (114) comprises:
correlating, by the processor (202), each of the plurality of nodes and the one or more connection paths within the generated graphical representation using a context;
identifying, by the processor (202), one or more patterns associated with the plurality of nodes and the one or more connection paths within the generated graphical representation based on the correlation;
determining, by the processor (202), a behavioral score and a performance score for each of the plurality of nodes within the generated graphical representation based on the identified one or more patterns; and
mapping, by the processor (202), the determined behavioral score and the performance score with a predetermined threshold value;
determining, by the processor (202), a deviation in the determined behavioral score and the performance score based on the mapping; and
determining, by the processor (202), the one or more anomalies associated with the plurality of assets (110A-N) and the artifacts of the technical installation (114) based on the determined deviation.

12. The method according to claim 11, further comprising:
predicting, by the processor (202), an occurrence of an event within the technical installation (114) based on the determined behavioral score and the performance score, wherein the event comprises the one or more anomalies;
applying, by the processor (202), the predicted occurrence of the event as an input to a trained Large Language Model (LLM); and
generating, by the processor (202), a LLM response comprising a root cause for the predicted occurrence of the event.

13. A computing system (102) comprising:
one or more processor(s) (202); and
a memory (204) coupled to the one or more processor (s)(202), wherein the memory (204) comprises a multi-modal graph generation module (112) stored in the form of machine-readable instructions executable by the one or more processor(s) (202), wherein the multi-modal graph generation module (112) is capable of performing a method according to any of the claims 1-12.

14. A computing environment (100) comprising:
one or more user devices (108A-N);
one or more technical installation (114) comprising one or more assets (110AN); and
a computing system (102) communicatively coupled to the one or more technical installation (114) and the one or more user devices (108A-N) via a network (104), wherein the computing system (102) comprises an multi-modal graph generation module (112) capable of performing a method according to any of the claims 1-12.

15. A computer program product comprising machine-readable instructions stored therein that, when executed by one or more processor(s) (202), cause the one or more processor(s) (202) to perform a method according to any of the claims 1-12.
